# EUROPEAN PATENT APPLICATION

(11) **EP 4 773 474 A1**
(43) Date of publication of application: **08.07.2026**
(21) Application number: 24874893.1
(22) Date of filing: 25.09.2024
(51) Int. Cl.: H02J 50/90, H01F 7/02, H01F 27/36, H02J 50/00

(54) **ELECTRONIC DEVICE FOR WIRELESSLY CHARGING BATTERY**

(30) Priority: 04.10.2023 KR 20230131579; 15.12.2023 KR 20230182733
(71) Applicant: Samsung Electronics Co., Ltd., Suwon-si, Gyeonggi-do 16677 (KR)
(72) Inventor: LEE, Kyungwoo, Suwon-si, Gyeonggi-do 16677 (KR); PARK, Bumjin, Suwon-si, Gyeonggi-do 16677 (KR); PARK, Jaehyun, Suwon-si, Gyeonggi-do 16677 (KR)
(74) Representative: Appleyard Lees IP LLP
(86) International application number: PCT/KR2024/014512
(87) International publication number: WO 2025/075335

(57) **Abstract**

An electronic device, according to one embodiment of the present disclosure, may comprise a wireless charging module for charging a battery by a wireless charging method. The wireless charging module may comprise: a wireless charging power receiver induction coil which has a joining surface and has a center that is orthogonal to the joining surface; and a magnetic body unit which is arranged on the outside of the wireless charging power receiver induction coil so as to enable a wireless charging power transmitter induction coil and the wireless charging power receiver induction coil to be aligned with each other. The magnetic body unit may have a magnet, in which a portion close to the center and a portion far from the center have mutually opposite polarities, arranged so as to be perpendicular to the joining surface. The magnetic body unit may have a magnet, for connecting magnets having mutually different polarities, arranged into a U-shape at a portion far from the joining surface. Other various embodiments are possible.

## Description

### [Technical Field]

Embodiments of the present disclosure relate to an electronic device for wirelessly charging a battery.

### [Background Art]

An electronic device is pursuing a thin thickness, a light weight, a small size, and a multi-function. To this end, a display and various components are disposed in the electronic device. As display technology develops, research and development on an electronic device including a display (or a flexible display) are being actively conducted. A display (or a flexible display) may be included in an electronic device, and a digitizer may be applied to convert an analog coordinate (e.g., a position) of an electronic pen (e.g., a stylus pen) into digital data.

In a wireless charging system, by using a coil, a battery may be wirelessly charged. For example, a wireless charging system may be configured to include a power supply device (e.g., a charging pad or a charging cradle) having a plurality of transmitting coils and a power receiving device (e.g., a smartphone, a smart watch, a wireless earphone charging case (or, a cradle)) having a receiving coil.

The above-mentioned are provided solely as background information to aid in the understanding of the embodiments of the present disclosure. No determination has been made, and no assertion is made, as to whether any of the above-mentioned may be applicable as the prior art in relation to the present disclosure.

### [Disclosure of Invention]

### [Solution to Problem]

To improve efficiency of a wireless charging scheme, a charging coil of a first electronic device (e.g., a wireless power receiving device) and a charging coil of a second electronic device (e.g., a wireless power transmitting device) need to be aligned. The first electronic device (e.g., a wireless power receiving device) may include a magnetic unit (e.g., a magnet unit) that is disposed (or arranged) to surround a coil in a wireless charging module for alignment of the coil.

By the magnetic unit (e.g., a magnet unit), the coil may be aligned (e.g., aligned to be overlapped in a z-axis direction). In the wireless charging module, a magnetic unit (e.g., a magnet unit) is disposed, and by magnetic bonding, alignment of the coil may be implemented to maintain high charging efficiency. Although charging efficiency increases, since a magnetic force is generated from the magnetic unit (e.g., a magnet unit), a resultant influence may be given to electronic components of the electronic device. For example, by a magnetic force generated by the magnetic unit (e.g., a magnet unit) itself, a resultant influence may be given to driving of a digitizer and a camera module disposed in the electronic device.

One embodiment of the present disclosure may provide an electronic device in which a magnetic unit (e.g., a magnet unit, a magnet structure, a magnetic structure) is disposed so as not to give an influence to driving of a digitizer and a camera module disposed in the electronic device.

One embodiment of the present disclosure may provide an electronic device that may substantially eliminate (or reduce) an influence on driving of a digitizer and a camera module due to a magnetic force generated from a magnetic unit (e.g., a magnet unit, a magnet structure, a magnetic structure) even when the magnetic unit (e.g., a magnet unit, a magnet structure, a magnetic structure) is disposed to surround a coil of a wireless charging module.

Technical problems intended to be achieved in this document are not limited to the technical problems mentioned above, and may be variously expanded without departing from the technical teachings and scope of the present disclosure. Other technical problems not mentioned may be clearly understood by those skilled in the art to which this document belongs from the description below.

An electronic device according to one embodiment of the present disclosure may include a wireless charging module that charges a battery by a wireless charging scheme. The wireless charging module may include a wireless charging power receiver induction coil, which has a joining surface and a center orthogonal to the joining surface, and a magnetic body unit is disposed outside the wireless charging power receiver induction coil so as to achieve alignment between a wireless charging power transmitter induction coil and the wireless charging power receiver induction coil. The magnetic body unit may be disposed to have a magnet, in which a portion close to a center and a portion far from the center have polarities of opposite schemes, disposed (or arranged) so as to be perpendicular to the joining surface. The magnetic body unit may be disposed in a U-shape with a magnet connecting magnets of different polarities at a portion far from the joining surface.

An electronic device according to one embodiment of the present disclosure may include a wireless charging module that charges a battery by a wireless charging scheme. The wireless charging module may include a coil that is wound with reference to a center point and is disposed, a magnetic unit that is disposed to surround the coil, and a shielding part that is disposed at an upper portion of the magnetic unit. The magnetic unit may include a first magnet unit, a second magnet unit, and a third magnet unit. The first magnet unit may be disposed so that a first polarity and a second polarity opposite to the first polarity are formed in a vertical direction of the electronic device. The second magnet unit may be disposed at a predetermined interval from the first magnet unit, so that a first polarity and a second polarity opposite to the first polarity are formed in the vertical direction of the electronic device. The third magnet unit may be disposed between the first magnet unit and the second magnet unit, so that a first polarity and a second polarity opposite to the first polarity are formed in a horizontal direction of the electronic device.

An electronic device according to one embodiment of the present disclosure may include a wireless charging module that charges a battery by a wireless charging scheme. The wireless charging module may include a coil that is wound with reference to a center point and is disposed, a magnetic unit that is disposed to surround the coil, and a shielding part that is disposed at an upper portion of the magnetic unit. The magnetic unit may include a first magnet unit, a second magnet unit, and a third magnet unit. The first magnet unit may be disposed so that a first polarity and a second polarity opposite to the first polarity are formed in a direction offset by a predetermined angle from a vertical direction of the electronic device. The second magnet unit may be disposed at a predetermined interval from the first magnet unit, so that a first polarity and a second polarity opposite to the first polarity are formed in a direction offset by a predetermined angle from the vertical direction of the electronic device.

An electronic device according to one embodiment of the present disclosure may substantially eliminate (or reduce) an influence on driving of a digitizer and a camera module due to a magnetic force generated from a magnetic unit (e.g., a magnet unit, a magnet structure, a magnetic structure) even when the magnetic unit (e.g., a magnet unit, a magnet structure, a magnetic structure) is disposed to surround a coil of a wireless charging module.

An electronic device according to one embodiment of the present disclosure may, when applying a magnetic unit that is disposed to surround a coil, reduce a magnetic force directed to a vertical direction (e.g., a z-axis direction) of an electronic device (e.g., a wireless power receiving device). In this case, by maintaining (or improving) an attraction (Pull force) between the electronic device (e.g., the wireless power receiving device) and a wireless power transmitting device, an alignment performance of the coil may be increased.

An electronic device according to one embodiment of the present disclosure may, when applying the magnetic unit that is disposed to surround the coil, by reducing a magnetic force directed to a vertical direction (e.g., a z-axis direction) of an electronic device (e.g., a wireless power receiving device), reduce an influence on driving of electronic components (e.g., a digitizer, a camera module) disposed inside the electronic device (e.g., the wireless power receiving device).

The effects obtained by the present disclosure are not limited to the aforementioned effects, and other effects, which are not mentioned above, will be clearly understood by those skilled in the art to which the present disclosure pertains from the following description.

### [Brief Description of Drawings]

In connection with the description of the drawings, the same or similar reference numerals may be used for the same or similar constituent elements.
Fig. 1 is a block diagram illustrating an electronic device 101 in a network environment 100 according to various embodiments.
FIG. 2 is a block diagram schematically illustrating a wireless charging system according to one embodiment.
FIG. 3 is a block diagram illustrating a wireless charging system according to one embodiment.
FIG. 4 is a view illustrating that a wireless charging module is disposed inside an electronic device.
FIG. 5 is a view illustrating a coil and a magnetic unit of a wireless charging module.
FIG. 6 and FIG. 7 are views illustrating a structure of a wireless charging module of an electronic device.
FIG. 8 and FIG. 9 are views illustrating a structure of a magnetic unit according to one embodiment of the present disclosure.
FIG. 10 is a view illustrating a magnetic unit structure of a comparative example.
FIG. 11 is a view illustrating a magnetic unit structure of a comparative example.
FIG. 12 is a view illustrating an influence of a magnetic force generated in a magnetic unit of a comparative example.
FIG. 13 is a view illustrating a magnetic unit structure according to one embodiment of the present disclosure.
FIG. 14 is a view illustrating a magnetic unit structure according to one embodiment of the present disclosure.
FIG. 15 is a view illustrating an influence of a magnetic force generated in a magnetic unit according to one embodiment of the present disclosure.
FIG. 16 is a view illustrating a magnetic unit structure according to one embodiment of the present disclosure.
FIG. 17 is a view illustrating a magnetic unit structure according to one embodiment of the present disclosure.
FIG. 18 is a view illustrating a magnetic unit structure according to one embodiment of the present disclosure.
FIG. 19 is a view illustrating a magnetic unit structure according to one embodiment of the present disclosure.
FIG. 20 is a view illustrating a magnetic unit structure according to one embodiment of the present disclosure.
FIG. 21 is a view illustrating a magnetic unit structure according to one embodiment of the present disclosure.
FIG. 22 is a view illustrating a magnetic unit structure according to one embodiment of the present disclosure.
FIG. 23 is a view illustrating an influence of a magnetic force generated in a magnetic unit according to one embodiment of the present disclosure.

Throughout the drawings, it should be noted that the same reference numbers are used to describe the same or similar elements, features, and structures.

### [Mode for the Invention]

The following description with reference to the accompanying drawings is provided to give a comprehensive understanding of the various embodiments of the present disclosure, as defined by the claims and the equivalents thereof. Various specific details are included herewith for the purpose of the understanding, but should be considered as illustrative only. Therefore, those skilled in the art will recognize that various alterations and modifications may be made to the various embodiments disclosed in the present specification without departing from the scope and technical teachings of the content of the present disclosure. In addition, for clarity and conciseness, descriptions of well-known features and constitutions may be omitted.

The terms and words used in the following descriptions and claims are not limited to their literary meanings, but are merely those used by the applicant to enable a clear and consistent understanding of the present document. Therefore, it should be obvious to those skilled in the art that the following descriptions of various embodiments of the present document, as defined by the appended claims and the equivalents thereof, are not intended to limit the present document, but are provided solely for the purpose of illustration.

The singular form should be understood to include the plural referents unless the context clearly dictates otherwise. Therefore, for example, a reference to a "surface of a constituent element" may include a reference to one or more of those surfaces.

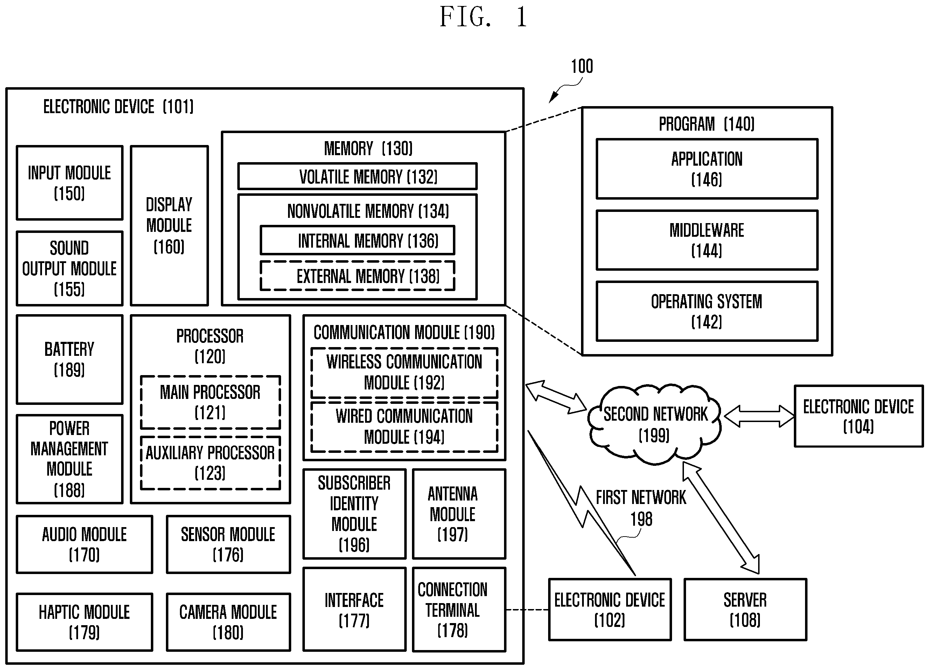

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{TM}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to one embodiment, the display module 160 may include a flexible display configured to be folded or unfolded.

According to one embodiment, the display module 160 may include a flexible display that is disposed to be slidable (e.g., sliding in an x-axis direction, sliding in a y-axis direction) and provides a screen (e.g., a display screen).

According to one embodiment, the display module 160 may also be referred to as a variable-type display (e.g., stretchable display), an expandable display or a slide-in/out display.

According to various embodiments, the sensor module 176 may include a travel distance detection sensor for detecting a distance between a first housing and a second housing of an electronic device.

According to one embodiment, the electronic device 101 may include the display module 160 and an electronic pen (e.g., a stylus pen). For example, the display module 160 may include a flexible display configured to be folded or unfolded. For example, the display module 160 may include a display driver IC touch circuit, a digitizer, and a digitizer driving unit.

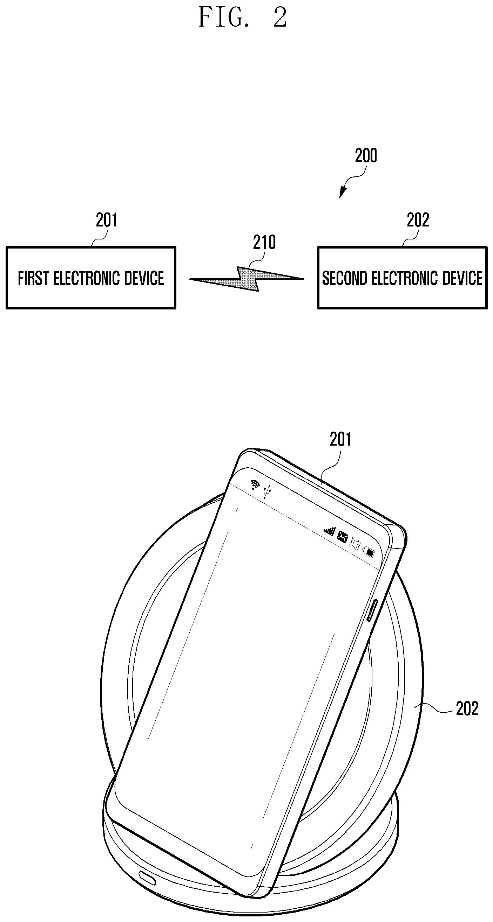

FIG. 2 is a block diagram schematically illustrating a wireless charging system according to one embodiment.

With reference to FIG. 2, a wireless charging system 200 according to various embodiments may include a first electronic device 201 (e.g., a wireless power receiving device), and/or a second electronic device 202 (e.g., a wireless power transmitting device).

According to one embodiment, the first electronic device 201 and the second electronic device 202 may perform a short-range communication 210 (e.g., a wireless charging) through a magnetic field.

According to one embodiment, the short-range communication 210 may include near field communications (NFC) communication, magnetic secure transmission (MST) communication, and/or a wireless charging. For example, the first electronic device 201 and the second electronic device 202 may perform an NFC communication through the magnetic field. For example, the first electronic device 201 and the second electronic device 202 may perform an MST communication. For example, the first electronic device 201 and the second electronic device 202 may transmit power or may receive power in a wireless charging scheme (manner or method). The first electronic device 201 and the second electronic device 202 may perform the short-range communication 210 by using a charging frequency band. The first electronic device 201 may perform a communication by using an amplitude shift keying (ASK) modulation technique, and the second electronic device 202 may perform a communication by using a frequency shift keying (FSK) modulation technique.

According to one embodiment, a wireless charging may include at least one of an electromagnetic induction scheme, a magnetic resonance scheme, and/or an RF/Micro Wave Radiation scheme.

According to one embodiment, for the first electronic device 201 to receive power from the second electronic device 202, a wireless charging scheme of the first electronic device 201 may need to be consistent (or matched) with a wireless charging scheme of the second electronic device 202.

For example, based on a wireless charging scheme of the second electronic device 202 and a wireless charging scheme of the first electronic device 201 matching as an electromagnetic induction scheme, the first electronic device 201 may receive power as the electromagnetic induction scheme. In another example, based on a wireless charging scheme of the second electronic device 202 and a wireless charging scheme of the first electronic device 201 matching as a magnetic resonance scheme, the first electronic device 201 may receive power as the magnetic resonance scheme.

According to one embodiment, for the second electronic device 202 and the first electronic device 201 to perform the short-range communication 210 (e.g., a wireless charging) through the magnetic field, the first electronic device 201 may be disposed to be proximate to the second electronic device 202. According to one embodiment, the first electronic device 201 may be disposed within a designated distance from the second electronic device 202. For example, the second electronic device 202 may include a designated interface area for performing a wireless charging.

According to one embodiment, when the first electronic device 201 is disposed within an interface area of the second electronic device 202, the second electronic device 202 may detect the first electronic device 201.

According to one embodiment, the second electronic device 202 may detect the first electronic device 201 by sensing that the first electronic device 201 generates a designated resonance (e.g., an induced power).

According to one embodiment, the designated resonance may include a resonance generated from the first electronic device 201. For example, the second electronic device 202 may detect the first electronic device 201 by sensing that the first electronic device 201 generates a resonance.

According to one embodiment, the first electronic device 201 may include a resonator (not illustrated) that generates a resonance in a designated band (e.g., 100kHz~300kHz) to generate the designated resonance. The first electronic device 201 may improve an efficiency of a wireless charging by optimizing a disposition of the resonator.

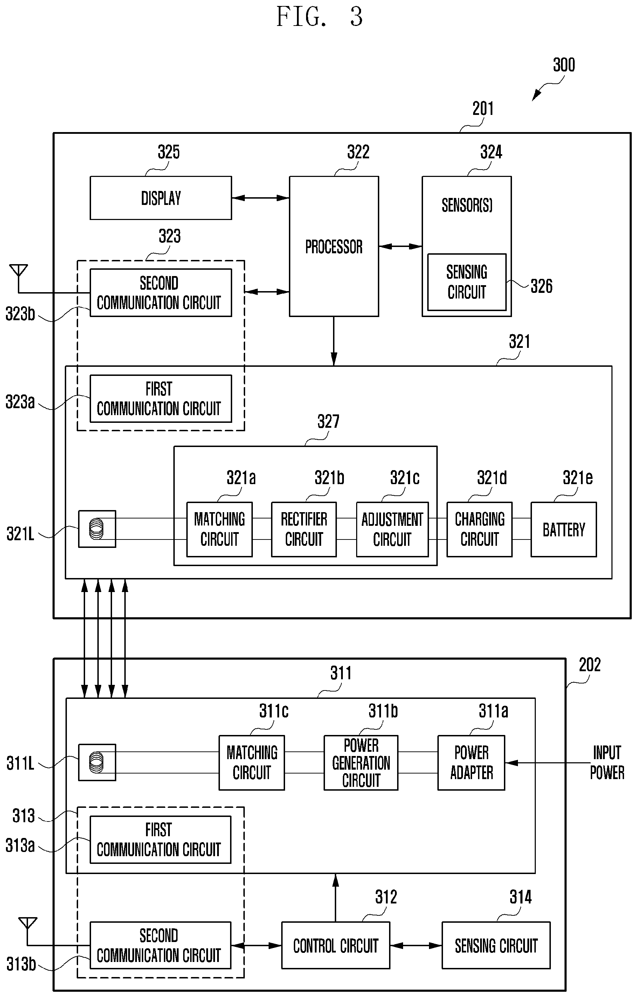

FIG. 3 is a block diagram illustrating a wireless charging system according to one embodiment.

With reference to FIG. 3, a wireless charging system 300 (e.g., a wireless charging system 200 of FIG. 2) may include embodiments that are at least partially similar to or different from the wireless charging system 200 illustrated in FIG. 2.

According to one embodiment, when a receiving coil 321L of the first electronic device 201 is disposed to be at least partially overlapped on a transmitting coil 311L of the second electronic device 202, or when the receiving coil 321L of the first electronic device 201 is disposed within a designated distance from the transmitting coil 311L of the second electronic device 202, the second electronic device 202 may wirelessly supply power to the first electronic device 201 through the transmitting coil 311L.

In various embodiments of this document, the first electronic device 201 may be the electronic device 101 illustrated in FIG. 1, or may be a similar electronic device. The second electronic device 202 may be an external device from a viewpoint of the first electronic device 201, and, for example, may be the electronic device 102 illustrated in FIG. 1, or may be a similar electronic device.

According to one embodiment, the second electronic device 202 may be the electronic device 101 illustrated in FIG. 1, or may be a similar electronic device. The first electronic device 201 may be an external device from a viewpoint of the second electronic device 202, and, for example, may be the electronic device 102 illustrated in FIG. 1, or may be a similar electronic device.

According to one embodiment, the second electronic device 202 may be an electronic device identical or similar to the first electronic device 201. For example, the first electronic device 201 may also transmit power to the second electronic device 202.

According to one embodiment, the second electronic device 202 (e.g., the electronic device 101 of FIG. 1) may include a power transmission circuit 311, a control circuit 312 (e.g., the processor 120 of FIG. 1), a communication circuit 313 (e.g., the communication module 190 of FIG. 1), or a sensing circuit 314 (e.g., the sensor module 176 of FIG. 1).

According to one embodiment, the power transmission circuit 311 may include a power adapter 311a that receives, as input, power (or electric power) from an outside and converts a voltage of an input power, a power generation circuit 311b that generates power, or a matching circuit 311c for increasing an efficiency between the transmitting coil 311L and the receiving coil 321L.

According to one embodiment, the power transmission circuit 311 may include a plurality of power adapters 311a, power generation circuits 311b, transmitting coils 311L, or matching circuits 311c so that transmission of power to a plurality of power receiving devices (e.g., a first power receiving device and a second power receiving device) is possible.

According to one embodiment, the control circuit 312 may perform overall control of the second electronic device 202, and may generate various messages required for a wireless power transmission and deliver the messages to the communication circuit 313.

For example, the control circuit 312 may calculate power (or a power amount) to be sent to the first electronic device 201 based on information received through the communication circuit 313. For example, the control circuit 312 may control the power transmission circuit 311 so that power generated by the transmitting coil 311L is transmitted to the first electronic device 201.

According to one embodiment, the communication circuit 313 of the second electronic device 202 may include at least one of a first communication circuit 313a or a second communication circuit 313b.

For example, the first communication circuit 313a of the second electronic device 202 may communicate with a first communication circuit 323a of the first electronic device 201 by using a frequency identical to or adjacent to a frequency used for power delivery at the transmitting coil 311L (e.g., in-band scheme).

According to one embodiment, the first communication circuit 313a of the second electronic device 202 may communicate with the first communication circuit 323a of the first electronic device 201 by using the transmitting coil 311L. Data (or a communication signal) generated by the first communication circuit 313a of the second electronic device 202 may be transmitted by using the transmitting coil 311L. For example, the first communication circuit 313a of the second electronic device 202 may deliver data to the first electronic device 201 by using a frequency shift keying (FSK) modulation technique.

According to one embodiment, the first communication circuit 313a of the second electronic device 202 may communicate with the first communication circuit 323a of the first electronic device 201 by causing a frequency of a power signal delivered through the transmitting coil 311L to be changed. For example, the first communication circuit 313a of the second electronic device 202 may communicate with the first communication circuit 323a of the first electronic device 201 by causing data to be included in a power signal generated from the power generation circuit 311b. For example, the first communication circuit 313a of the second electronic device 202 may represent data by increasing or lowering a frequency of a power transmission signal.

According to one embodiment, the second communication circuit 313b may communicate with the second communication circuit 323b of the first electronic device 201 by using a frequency different from a frequency used for power delivery at the transmitting coil 311L (e.g., outband scheme). For example, the second communication circuit 313b may acquire information related to a charging state (e.g., a voltage value after Rectifier, information of a rectified voltage value (e.g., Vrect), current information flowing in a rectifier circuit 321b (e.g., a load current, Iout), various packets, and/or messages from the second communication circuit 323b by using any one of various short-range communication schemes such as Bluetooth, Bluetooth low energy (BLE), Wi-Fi, and/or near field communication (NFC).

According to one embodiment, the sensing circuit 314 may include at least one sensor, and may sense at least one state of a power transmission device 201 by using the at least one sensor.

According to one embodiment, the sensing circuit 314 may include at least one of a temperature sensor, a motion sensor, or a current (or voltage) sensor. For example, the control circuit 312 may sense a temperature state of the second electronic device 202 by using a temperature sensor. In another example, the control circuit 312 may sense a motion state of the second electronic device 202 by using a motion sensor. For example, the control circuit 312 may sense a state of an output signal of the second electronic device 202, for example, a current magnitude, a voltage magnitude, or a power magnitude, by using a current (or voltage) sensor.

According to one embodiment, a current (or voltage) sensor may measure a signal in the power transmission circuit 311. A current (or voltage) sensor may measure a signal in at least some area of the matching circuit 311c or the power generation circuit 311b. For example, a current (or voltage) sensor may include a circuit that measures a signal at a front end of a coil 311L.

According to various embodiments, the sensing circuit 314 may be a circuit for foreign substance detection (e.g., an external object detection (FOD: foreign object detection)).

According to one embodiment, the first electronic device 201 (e.g., the electronic device 101 of FIG. 1) may include a power receiving circuit 321 (e.g., the power management module 188 of FIG. 1), a processor 322 (e.g., the processor 120 of FIG. 1), a communication circuit 323 (e.g., the communication module 190 of FIG. 1), at least one sensor 324 (e.g., the sensor module 176 of FIG. 1), a display 325 (e.g., the display device 160 of FIG. 1), or a sensing circuit 326. For example, the first electronic device 201 may be an electronic device identical or similar to the second electronic device 202.

According to one embodiment, the power receiving circuit 321 may include the receiving coil 321L that wirelessly receives power from the second electronic device 202, an Rx IC 327, a charging circuit 321d (e.g., a PMIC, a charger, a switched capacitor, or a voltage divider), or a battery 321e (e.g., the battery 189). In one embodiment, the Rx IC 327 may include the matching circuit 321a connected to the receiving coil 321L, the rectifier circuit 321b that rectifies received AC power to DC, or an adjustment circuit 321c (e.g., LDO) that adjusts a charging voltage.

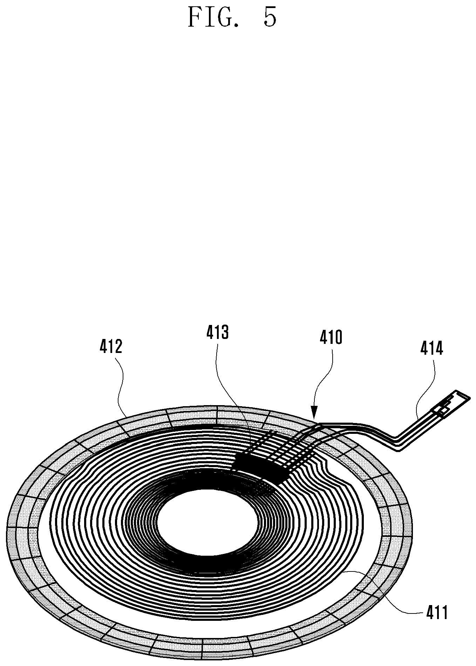

According to one embodiment, the receiving coil 321L may include a first coil 411 for a wireless charging of a magnetic resonance scheme (e.g., a first coil 411 of FIG. 5A), and/or a second coil 421 for a wireless charging of an electromagnetic induction scheme (e.g., a second coil 421 of FIG. 5A).

According to one embodiment, the first coil 411 may be designed to be driven in a designated high-frequency band. According to one embodiment, the designated high-frequency band may include about 6.78 MHz. For example, the first coil 411 may be designed to operate at about 6.78 MHz for wireless charging of a magnetic resonance scheme. According to one embodiment, the designated high-frequency band may include at least one of about 1 MHz, about 3.28 MHz, about 6.78 MHz, or about 13.56 MHz.

According to one embodiment, the second coil 421 may be designed to be driven in a designated low-frequency band. According to one embodiment, the designated low-frequency band may include 500 kHz or less for wireless power consortium (WPC) and/or power matters alliance (PMA). For example, the second coil 421 may be designed to operate at about 500 kHz or less for wireless charging of an electromagnetic induction scheme.

According to one embodiment, the processor 322 may perform overall control of the first electronic device 201, and may generate various messages required for wireless power reception and deliver the messages to the communication circuit 323.

According to one embodiment, the communication circuit 323 of the first electronic device 201 may include at least one of the first communication circuit 323a or the second communication circuit 323b. The first communication circuit 323a of the first electronic device 201 may communicate with the second electronic device 202 through the receiving coil 321L.

According to one embodiment, the first communication circuit 323a of the first electronic device 201 may communicate with the first communication circuit 313a of the second electronic device 202 by using the receiving coil 321L. Data (or a communication signal) generated by the first communication circuit 323a of the first electronic device 201 may be transmitted by using the receiving coil 321L. For example, the first communication circuit 323a of the first electronic device 201 may deliver data to the second electronic device 202 by using amplitude shift keying (ASK) modulation technique. The second communication circuit 323b may communicate with the second electronic device 202 by using any one of various short-range communication schemes such as Bluetooth, BLE, Wi-Fi, and NFC.

In various embodiments of this document, packets, information, or data transmitted and received by the second electronic device 202 and the first electronic device 201 may use at least one of the first communication circuit 323a or the second communication circuit 323b of the first electronic device 201.

According to one embodiment, at least one sensor 324 may include at least some of a current/voltage sensor, a temperature sensor, an illuminance sensor, or an acceleration sensor. In one embodiment, the at least one sensor 324 may be substantially identical to the sensor module 176 of FIG. 1 or may be a separate constituent element.

According to one embodiment, the display 325 may display various information related to wireless power transmission and reception.

According to one embodiment, the sensing circuit 326 may sense the second electronic device 202 by sensing an exploration signal or received power from the second electronic device 202. The sensing circuit 326 may sense a signal change of the receiving coil 321L generated by a signal output from the second electronic device 202, or a signal change at input/output terminals of the matching circuit 321a, or the rectifier circuit 321b. According to one embodiment, the sensing circuit 326 may also be included in the receiving circuit 321.

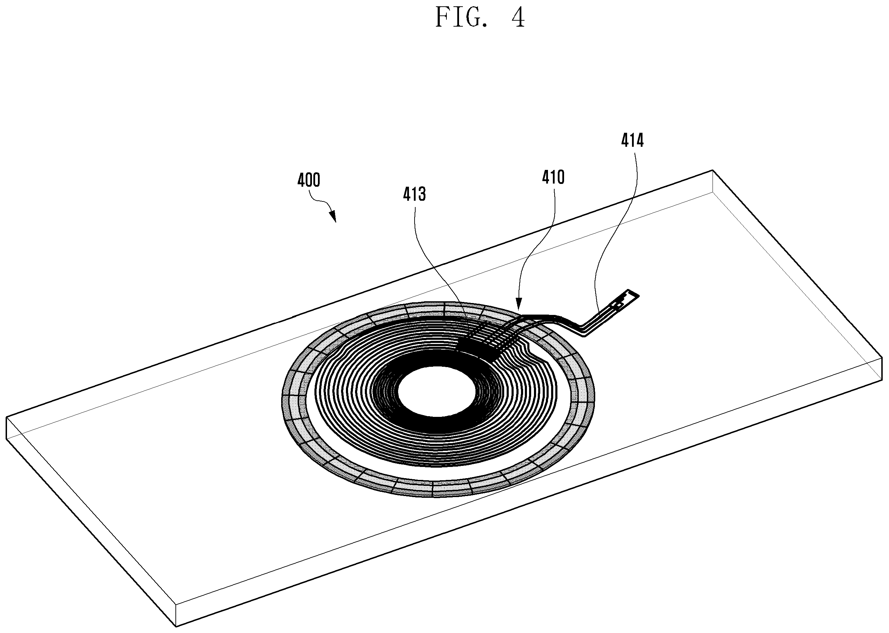

FIG. 4 is a view illustrating that a wireless charging module is disposed inside an electronic device. FIG. 5 is a view illustrating a coil and a magnetic unit of a wireless charging module.

With reference to FIG. 4 and FIG. 5, an electronic device 400 according to one embodiment of the present disclosure may include a wireless charging module 410 for wirelessly charging a battery (e.g., the battery 189 of FIG. 1).

According to one embodiment, the wireless charging module 410 may include a coil 411, a magnetic unit 412 (e.g., a magnet unit, a magnet structure, a magnetic structure), feeding lines 413, and a flexible printed circuit board (FPCB) 414.

For example, the coil 411 may be disposed such that a conductive wiring is wound with reference to a center point so as to form a circular (or elliptical) shape.

For example, the magnetic unit 412 (e.g., a magnet unit, a magnet structure, a magnetic structure) may be disposed so as to surround an outer periphery of the coil 411 with reference to the center point along a shape (e.g., a circular or an elliptical shape) of the coil 411. By the magnetic unit 412 (e.g., a magnet unit, a magnet structure, a magnetic structure), the coil 411 of the electronic device 400 and a coil disposed in a wireless power transmission device (e.g., the second electronic device 202 of FIG. 2 and FIG. 3) may be aligned (e.g., aligned to be overlapped in a z-axis direction). For example, the feeding lines 413 of the coil 411 may be disposed so as to be overlapped with the FPCB 414.

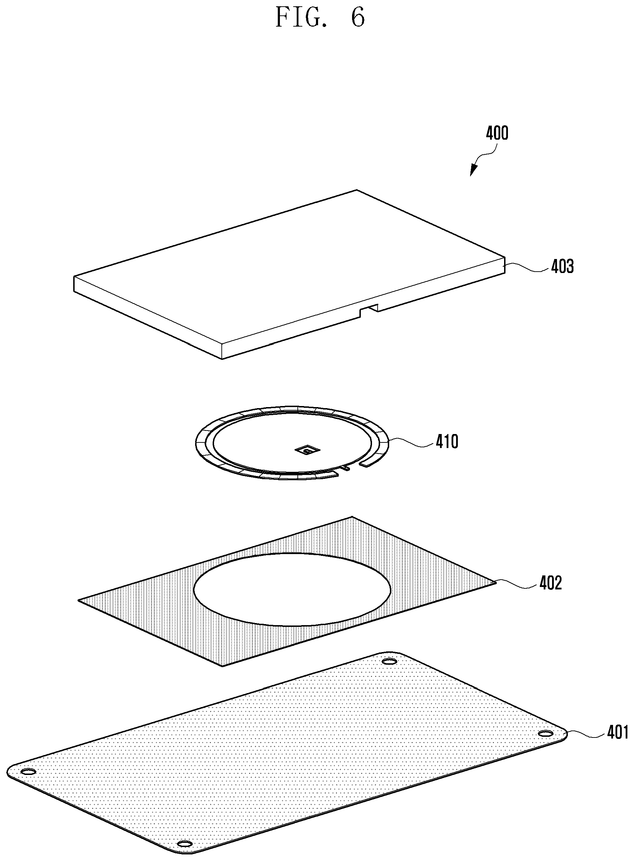

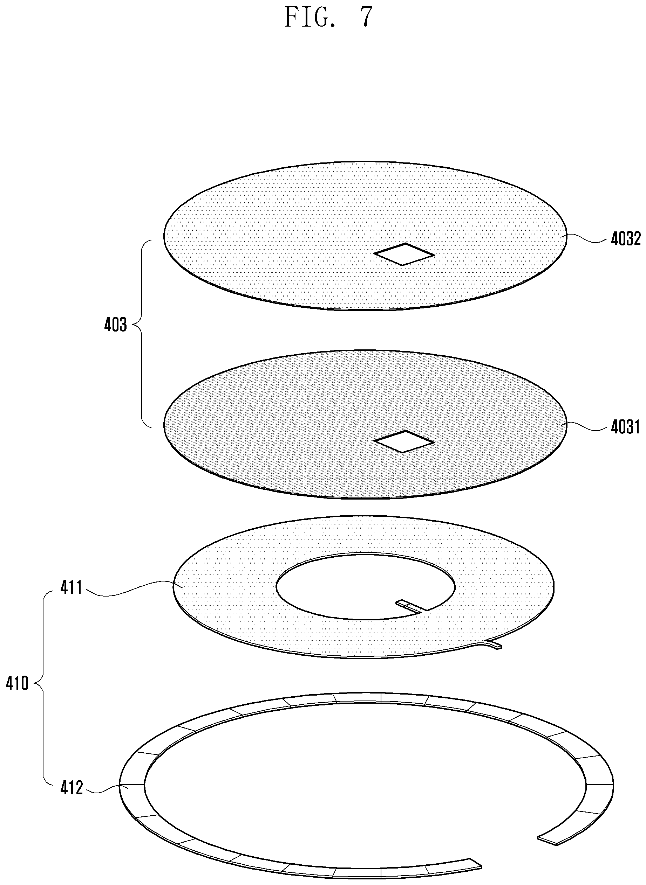

FIG. 6 and FIG. 7 are views illustrating a structure of a wireless charging module of an electronic device.

With reference to FIG. 6 and FIG. 7, the electronic device 400 may include a lower support part 401, a support plate 402, and a metal shielding part 403 so that the wireless charging module 410 may be disposed.

According to one embodiment, the wireless charging module 410 may include the coil 411, and the magnetic unit 412 (e.g., a magnet unit, a magnet structure, a magnetic structure).

According to one embodiment, the wireless charging module 410 may be disposed on an upper portion of the lower support part 401. The support plate 402 may include a hole of a circular (or elliptical) shape so that the wireless charging module 410 may be inserted. The shielding part 403 may be disposed at an upper portion of the wireless charging module 410 to shield an electromagnetism generated from the wireless charging module 410.

For example, the shielding part 403 may include a first shielding layer 4031 (e.g., a magnetic shielding layer) and a second shielding layer 4032 (e.g., a metal shielding layer).

For example, the first shielding layer 4031 (e.g., a magnetic shielding layer) may be disposed to be adjacent to the magnetic unit 412 (e.g., a magnet unit, a magnet structure, a magnetic structure). The second shielding layer 4032 (e.g., a metal shielding layer) may be disposed at an upper portion of the first shielding layer 4031 (e.g., a magnetic shielding layer).

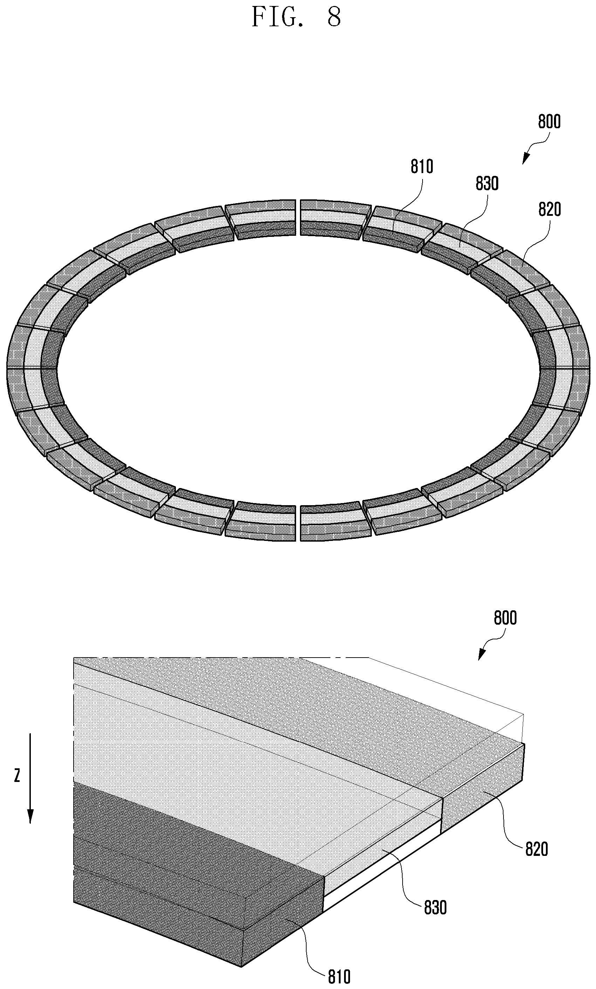

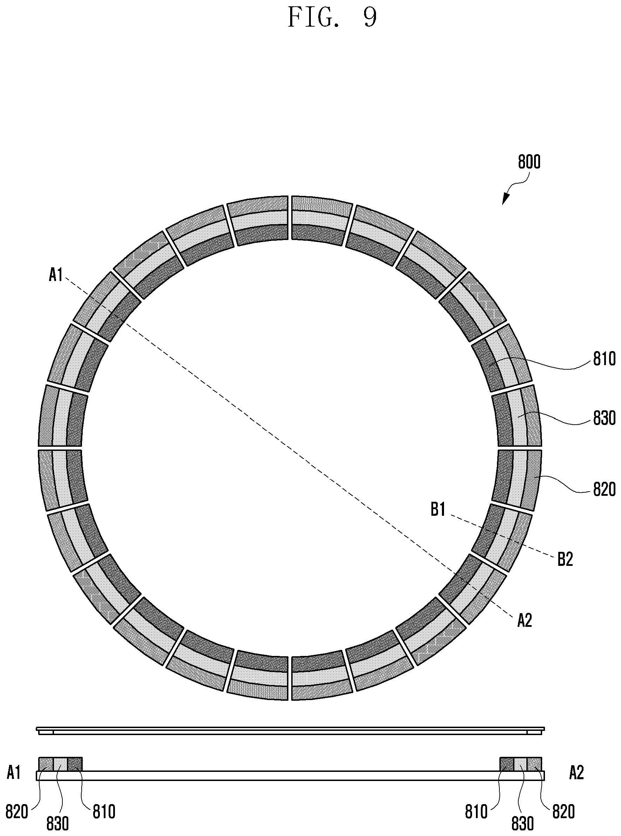

FIG. 8 and FIG. 9 are views illustrating a structure of a magnetic unit according to one embodiment of the present disclosure.

With reference to FIG. 8 and FIG. 9, the magnetic unit 800 may include a first magnet 810, a second magnet 820, and a non-magnetic unit 830. The first magnet 810 may be disposed so that a first polarity (e.g., an S pole) faces a -Z direction. The second magnet 820 may be disposed so that a second polarity (e.g., an N pole) faces a -Z direction.

For example, the first magnet 810, and the second magnet 820 may be disposed in a circular (or elliptical) shape so as to surround a coil (e.g., the coil 411 of FIG. 4) with reference to a center point. For example, a shape of the coil 411 is not limited to circular or elliptical embodiments, and the coil 411 may be formed in various shapes (e.g., a rectangular, or a polygonal, etc.).

According to one embodiment, the non-magnetic unit 830 may be disposed between the first magnet 810 and the second magnet 820.

For example, with reference to a center point of the coil 411, the first magnet 810 is disposed on an inside (e.g., an inner side), and the second magnet 820 may be disposed at an outer periphery (e.g., an outer side) of the first magnet 810. Not limited thereto, with reference to the center point of the coil 411, the second magnet 820 is disposed on an inside (e.g., an inner side), and the first magnet 810 may be disposed at an outer periphery (e.g., an outer side) of the second magnet 820.

For example, with reference to a vertical axis (e.g., a z-axis of FIG. 6) of an electronic device (e.g., the electronic device 400 of FIG. 4 and FIG. 6), the first magnet 810 and the second magnet 820 may be disposed (e.g., formed) in a single-layer structure.

For example, with reference to a vertical axis (e.g., a z-axis of FIG. 6) of an electronic device (e.g., the electronic device 400 of FIG. 4 and FIG. 6), the first magnet 810 and the second magnet 820 may be disposed (e.g., formed) in a multi-layer structure.

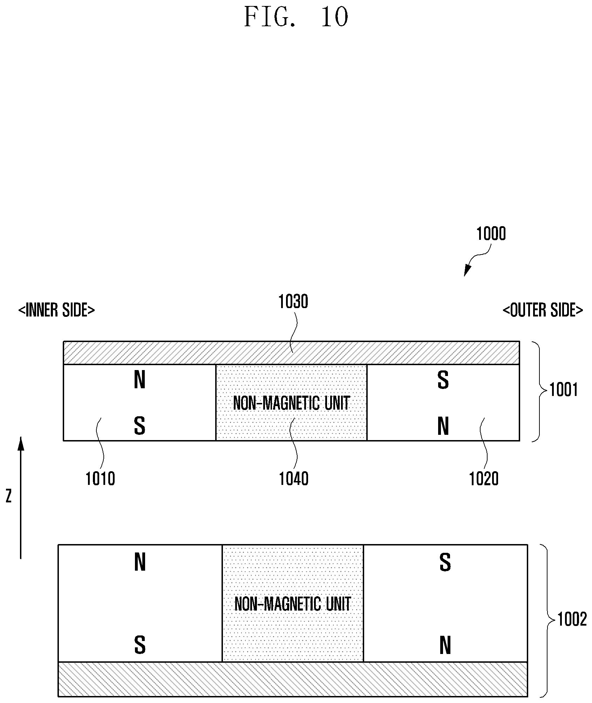

FIG. 10 is a view 1000 illustrating a magnetic unit structure of a comparative example. FIG. 10 is a view illustrating a cross-section of a magnetic unit 1001 along a B1-B2 line of FIG. 9. With reference to FIG. 10, the magnetic unit 1001 of an electronic device (e.g., a wireless power receiving device, the first electronic device 201 of FIG. 2) and a magnetic unit 1002 of a wireless power transmitting device (e.g., the second electronic device 202 of FIG. 2) may be disposed in an upper-lower magnetization scheme. For example, the upper-lower magnetization scheme may represent a magnetization form of a magnet in which an N pole and an S pole are divided up and down.

For example, between a first magnet 1010 and a second magnet 1020 of the magnetic unit 1001 of the electronic device (e.g., a wireless power receiving device), a non-magnetic unit 1040 (a non-magnetized zone) may be disposed. A shielding layer 1030 may be disposed at an upper portion of the magnetic unit 1001.

For example, so as to have a polarity opposite to a polarity of the first magnet 1010 and a polarity of the second magnet 1020 of the magnetic unit 1001 of the electronic device (e.g., a wireless power receiving device), the magnetic unit 1002 of the wireless power transmitting device (e.g., the second electronic device 202 of FIG. 2) may be disposed. By the magnetic unit 1001 of the electronic device (e.g., a wireless power receiving device) and the magnetic unit 1002 of the wireless power transmitting device (e.g., the second electronic device 202 of FIG. 2), a coil of the electronic device (e.g., a wireless power receiving device) and a coil of the wireless power transmitting device (e.g., the second electronic device 202 of FIG. 2) may be aligned (e.g., aligned to be overlapped in a z-axis direction).

When a magnetic unit (e.g., the magnetic unit 1001 of FIG. 10) is disposed in the upper-lower magnetization scheme of FIG. 10, a magnetic force is formed in a vertical direction, so an alignment performance with a wireless power transmitting device (e.g., the second electronic device 202 of FIG. 2) is excellent, but may affect driving of electronic components (e.g., a digitizer) disposed inside the electronic device (e.g., a wireless power receiving device).

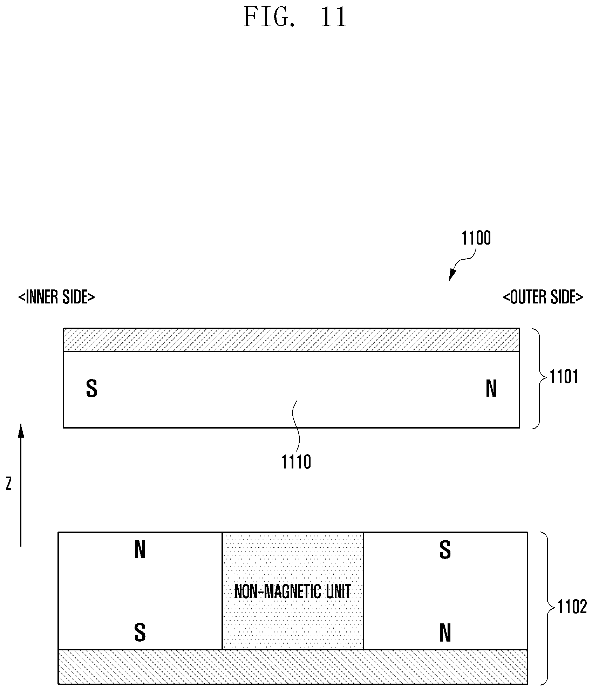

FIG. 11 is a view 1100 illustrating a magnetic unit structure of a comparative example.

With reference to FIG. 11, a magnetic unit 1101 of an electronic device (e.g., a wireless power receiving device, the first electronic device 201 of FIG. 2) and a magnetic unit 1102 of a wireless power transmitting device (e.g., the second electronic device 202 of FIG. 2) may be disposed in a radial scheme.

For example, a magnet 1110 of an electronic device (e.g., a wireless power receiving device) is disposed in a radial scheme, and a shielding layer may not be disposed separately. For example, the radial scheme may include a scheme of disposing a magnet so that magnetization is easy radially from a center of a circle. Not limited thereto, even when a magnetic unit 1101 of an electronic device (e.g., a wireless power receiving device) is disposed in a radial scheme, a shielding layer may be further included.

For example, so as to have a polarity opposite to a polarity of a magnet 1110 of an electronic device (e.g., a wireless power receiving device), a magnetic unit 1102 of a wireless power transmitting device (e.g., the second electronic device 202 of FIG. 2) may be disposed. By the magnetic unit 1101 of the electronic device (e.g., a wireless power receiving device) and the magnetic unit 1102 of the wireless power transmitting device (e.g., the second electronic device 202 of FIG. 2), a coil of the electronic device (e.g., a wireless power receiving device) and a coil of the wireless power transmitting device (e.g., the second electronic device 202 of FIG. 2) may be aligned (e.g., aligned to be overlapped in a z-axis direction).

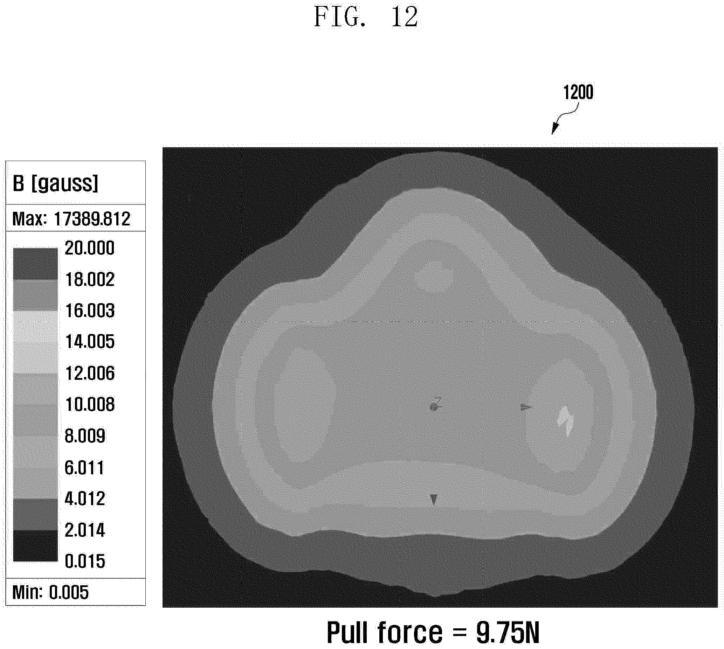

FIG. 12 is a view illustrating an influence of a magnetic force generated in a magnetic unit of a comparative example.

With reference to FIG. 12, when a magnetic unit (e.g., the magnetic unit 1101 of FIG. 11) is disposed in the radial scheme of FIG. 11, a magnetic force is formed in a vertical and a horizontal direction, so an influence on driving of electronic components (e.g., a digitizer) disposed inside an electronic device (e.g., a wireless power receiving device) is small, but an alignment performance with a wireless power transmitting device (e.g., the second electronic device 202 of FIG. 2) may be degraded.

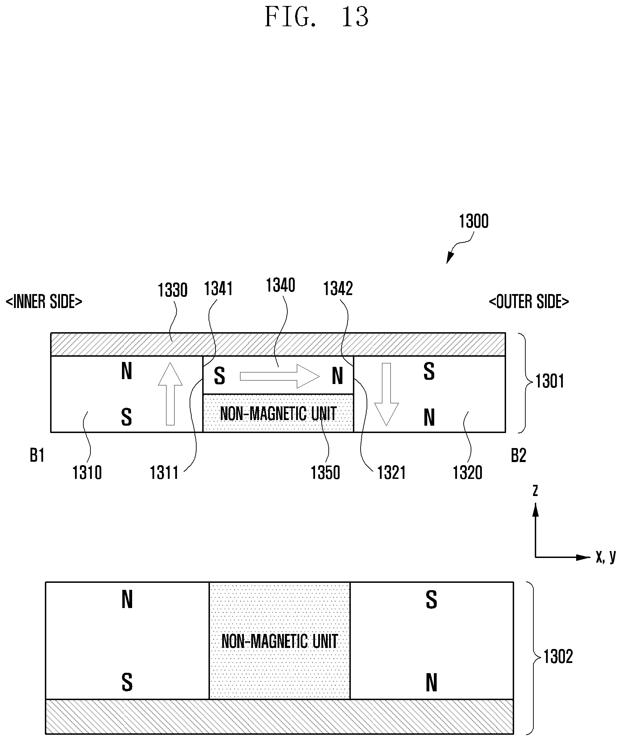

FIG. 13 is a view 1300 illustrating a magnetic unit structure according to one embodiment of the present disclosure. FIG. 13 is a view illustrating a cross-section of a magnetic unit 1301 along a B1-B2 line of FIG. 9.

With reference to FIG. 13, a wireless charging module (e.g., the wireless charging module 410 of FIG. 4) of an electronic device (e.g., the electronic device 101 of FIG. 1, the electronic device 400 of FIG. 4) of the present disclosure may include a magnetic unit 1301 (e.g., a magnet unit, a magnet structure, a magnetic structure).

According to one embodiment, the magnetic unit 1301 according to one embodiment of the present disclosure (e.g., a magnet unit, a magnet structure, a magnetic structure) may include a plurality of magnet units 1310, 1320, and 1340, and a non-magnetic unit 1350. At an upper portion of the magnetic unit 1301 (e.g., a magnet unit, a magnet structure, a magnetic structure), a shielding part 1330 may be disposed.

The magnetic unit 1301 (e.g., a magnet unit, a magnet structure, a magnetic structure) according to one embodiment of the present disclosure may be disposed in a composite form in which a plurality of magnet units 1310, 1320, and 1340 are disposed (e.g., in a 'U'-shaped or 'V'-shaped form).

According to one embodiment, the magnetic unit 1301 (e.g., a magnet unit, a magnet structure, a magnetic structure) may include a first magnet unit 1310, a second magnet unit 1320, and a third magnet unit 1340 (e.g., a bridge magnet unit).

For example, the first magnet unit 1310 and the second magnet unit 1320 may be disposed to align a coil (e.g., the coil 411 of FIG. 5) of an electronic device (e.g., a wireless power receiving device) and a coil of a wireless power transmitting device (e.g., the second electronic device 202 of FIG. 2).

For example, the third magnet unit 1340 (e.g., a bridge magnet unit) may be disposed to form a radiation direction of a magnetic force generated by the magnetic unit 1301 (e.g., a magnet unit, a magnet structure, a magnetic structure) itself in a horizontal direction (an x-axis direction or a y-axis direction) (e.g., an x-axis direction or a y-axis direction of FIG. 6) of the electronic device 400.

For example, the first magnet unit 1310 may be disposed so that a first polarity (e.g., an S pole) and a second polarity (e.g., an N pole) are formed in a vertical direction (e.g., a z-axis direction) of the electronic device 400.

For example, the second magnet unit 1320 may be disposed so that a first polarity (e.g., an S pole) and a second polarity (e.g., an N pole) are formed in a vertical direction (e.g., a z-axis direction) of the electronic device 400.

For example, so as to have a polarity opposite to a polarity of the first magnet unit 1310 and a polarity of the second magnet unit 1320 of the magnetic unit 1301 (e.g., a magnet unit, a magnet structure, a magnetic structure) of the electronic device (e.g., a wireless power receiving device), the magnetic unit 1302 of a wireless power transmitting device (e.g., a second electronic device 202 of FIG. 2) may be disposed. By the magnetic unit 1301 (e.g., a magnet unit, a magnet structure, a magnetic structure) of the electronic device (e.g., a wireless power receiving device) and the magnetic unit 1302 of the wireless power transmitting device (e.g., a second electronic device 202 of FIG. 2), a coil of the electronic device (e.g., a wireless power receiving device) and a coil of the wireless power transmitting device (e.g., a second electronic device 202 of FIG. 2) may be aligned (e.g., aligned to be overlapped in a z-axis direction).

For example, the first magnet unit 1310 and the second magnet unit 1320 may be disposed at a predetermined interval. Between the first magnet unit 1310 and the second magnet unit 1320, the third magnet unit 1340 (e.g., a bridge magnet unit) and the non-magnetic unit 1350 may be disposed.

For example, the first magnet unit 1310 and the second magnet unit 1320 may have substantially the same thickness.

For example, the third magnet unit 1340 (e.g., a bridge magnet unit) may have a thickness thinner than the first magnet unit 1310 or the second magnet unit 1320.

For example, the third magnet unit 1340 (e.g., a bridge magnet unit) may be disposed so that a first polarity (e.g., an S pole) and a second polarity (e.g., an N pole) are formed in a horizontal direction (e.g., an x-axis direction or a y-axis direction) of the electronic device 400.

For example, the non-magnetic unit 1350 may be disposed at a lower portion of the third magnet unit 1340. For example, the non-magnetic unit 1350 may be disposed to be adjacent to the magnetic unit 1302 of the wireless power transmitting device (e.g., the second electronic device 202 of FIG. 2).

For example, the third magnet unit 1340 (e.g., a bridge magnet unit) may be disposed at an upper portion of the non-magnetic unit 1350.

For example, when the magnetic unit 1301 (e.g., a magnet unit, a magnet structure, a magnetic structure) is viewed in a horizontal direction (e.g., an x-axis direction or a y-axis direction) of the electronic device 400, at least some of one side surface 1311 of the first magnet unit 1310 and a first side surface 1341 of the third magnet unit 1340 (e.g., a bridge magnet unit) may be disposed to be at least partially overlapped (e.g., to be in contact).

For example, when the magnetic unit 1301 (e.g., a magnet unit, a magnet structure, a magnetic structure) is viewed in the horizontal direction (e.g., the x-axis direction or the y-axis direction) of the electronic device 400, at least some of one side surface 1321 of the second magnet unit 1320 and a second side surface 1342 of the third magnet unit 1340 (e.g., a bridge magnet unit) may be disposed to be at least partially overlapped (e.g., to be in contact).

For example, in FIG. 13, the first magnet unit 1310, the second magnet unit 1320, and the third magnet unit 1340 (e.g., a bridge magnet unit) are illustrated to be in an angular form. Not limited thereto, corner portions of the first magnet unit 1310, the second magnet unit 1320, and the third magnet unit 1340 (e.g., a bridge magnet unit) may be formed to have a rounded shape.

For example, the third magnet unit 1340 (e.g., a bridge magnet unit) may be disposed between the first magnet unit 1310 and the second magnet unit 1320, so that a radiation direction of a magnetic force generated by the magnetic unit 1301 itself may be made to be directed toward a horizontal direction (e.g., an x-axis direction or a y-axis direction) of the electronic device 400. In addition, a radiation direction of a magnetic force generated in the wireless charging module 410 may be made to be directed toward the horizontal direction (e.g., the x-axis direction or the y-axis direction) of the electronic device 400.

For example, a radiation direction of a magnetic force generated by the magnetic unit 1301 itself may be directed from the first magnet unit 1310 to the third magnet unit 1340 (e.g., a bridge magnet unit), and may be directed from the third magnet unit 1340 (e.g., a bridge magnet unit) to the second magnet unit 1320. Conversely, a radiation direction of a magnetic force generated by the magnetic unit 1301 itself may be directed from the second magnet unit 1320 to the third magnet unit 1340 (e.g., a bridge magnet unit), and may be directed from the third magnet unit 1340 (e.g., a bridge magnet unit) to the first magnet unit 1310.

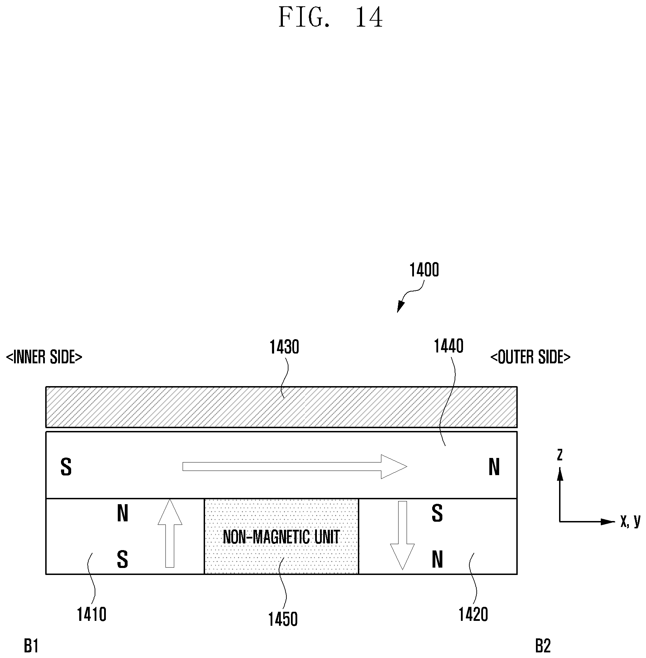

FIG. 14 is a view illustrating a magnetic unit structure according to one embodiment of the present disclosure.

With reference to FIG. 14, a wireless charging module (e.g., the wireless charging module 410 of FIG. 4) of an electronic device (e.g., the electronic device 101 of FIG. 1, the electronic device 400 of FIG. 4) of the present disclosure may include a magnetic unit 1400 (e.g., a magnet unit, a magnet structure, a magnetic structure).

According to one embodiment, the magnetic unit 1400 according to one embodiment of the present disclosure (e.g., a magnet unit, a magnet structure, a magnetic structure) may include a plurality of magnet units 1410, 1420, and 1440, and a non-magnetic unit 1450. At an upper portion of the magnetic unit 1400 (e.g., a magnet unit, a magnet structure, a magnetic structure), a shielding part 1430 may be disposed.

The magnetic unit 1400 (e.g., a magnet unit, a magnet structure, a magnetic structure) according to one embodiment of the present disclosure may be disposed in a composite form in which a plurality of magnet units 1410, 1420, and 1440 are disposed (e.g., in a 'U'-shaped or 'V'-shaped form).

According to one embodiment, the magnetic unit 1400 (e.g., a magnet unit, a magnet structure, a magnetic structure) may include a first magnet unit 1410, a second magnet unit 1420, and a third magnet unit 1440 (e.g., a bridge magnet unit).

For example, the first magnet unit 1410 and the second magnet unit 1420 may be disposed to align a coil (e.g., the coil 411 of FIG. 5) of an electronic device (e.g., a wireless power receiving device) and a coil of a wireless power transmitting device (e.g., the second electronic device 202 of FIG. 2).

For example, the third magnet unit 1440 (e.g., a bridge magnet unit) may be disposed to form a radiation direction of a magnetic force generated by the magnetic unit 1400 (e.g., a magnet unit, a magnet structure, a magnetic structure) itself in a horizontal direction (an x-axis direction or a y-axis direction) (e.g., an x-axis direction or a y-axis direction of FIG. 6) of the electronic device 400.

For example, the first magnet unit 1410 may be disposed so that a first polarity (e.g., an S pole) and a second polarity (e.g., an N pole) are formed in a vertical direction (e.g., a z-axis direction) of the electronic device 400.

For example, the second magnet unit 1420 may be disposed so that a first polarity (e.g., an S pole) and a second polarity (e.g., an N pole) are formed in a vertical direction (e.g., a z-axis direction) of the electronic device 400.

For example, so as to have a polarity opposite to a polarity of the first magnet unit 1410 and a polarity of the second magnet unit 1420 of the magnetic unit 1400 (e.g., a magnet unit, a magnet structure, a magnetic structure) of the electronic device (e.g., a wireless power receiving device), a magnetic unit (the magnetic unit 1302 of FIG. 13) of a wireless power transmitting device (e.g., the second electronic device 202 of FIG. 2) may be disposed. By the magnetic unit 1400 (e.g., a magnet unit, a magnet structure, a magnetic structure) of the electronic device (e.g., a wireless power receiving device) and the magnetic unit 1302 of the wireless power transmitting device (e.g., a second electronic device 202 of FIG. 2), a coil of the electronic device (e.g., a wireless power receiving device) and a coil of the wireless power transmitting device (e.g., a second electronic device 202 of FIG. 2) may be aligned (e.g., aligned to be overlapped in a z-axis direction).

For example, the first magnet unit 1410 and the second magnet unit 1420 may be disposed at a predetermined interval. The non-magnetic unit 1450 may be disposed between the first magnet unit 1410 and the second magnet unit 1420.

For example, the third magnet unit 1440 (e.g., a bridge magnet unit) may be disposed so that a first polarity (e.g., an S pole) and a second polarity (e.g., an N pole) are formed in a horizontal direction (e.g., an x-axis direction or a y-axis direction) of the electronic device 400.

For example, the non-magnetic unit 1450 may be disposed at a lower portion of the third magnet unit 1440. For example, the non-magnetic unit 1450 may be disposed to be adjacent to a magnetic unit (e.g., the magnetic unit 1302 of FIG. 13) of a wireless power transmitting device (e.g., the second electronic device 202 of FIG. 2).

For example, the third magnet unit 1440 (e.g., a bridge magnet unit) may be disposed at an upper portion of the first magnet unit 1410, the second magnet unit 1420, and the non-magnetic unit 1450.

For example, when the magnetic unit 1400 (e.g., a magnet unit, a magnet structure, a magnetic structure) is viewed in a vertical direction (e.g., a z-axis direction) of the electronic device 400, an upper surface of the first magnet unit 1410 and a lower surface of the third magnet unit 1440 (e.g., a bridge magnet unit) may be disposed to be overlapped (e.g., to be in contact).

For example, when the magnetic unit 1400 (e.g., a magnet unit, a magnet structure, a magnetic structure) is viewed in the vertical direction (e.g., the z-axis direction) of the electronic device 400, an upper surface of the second magnet unit 1420 and a lower surface of the third magnet unit 1440 (e.g., a bridge magnet unit) may be disposed to be overlapped (e.g., to be in contact).

For example, the first magnet unit 1410 and the second magnet unit 1420 may have substantially the same thickness.

For example, the third magnet unit 1440 (e.g., a bridge magnet unit) may have a thickness thinner than the first magnet unit 1410 or the second magnet unit 1420. Not limited thereto, the third magnet unit 1440 (e.g., a bridge magnet unit) may be formed to be thicker than the first magnet unit 1410 or the second magnet unit 1420.

For example, in FIG. 14, the first magnet unit 1410, the second magnet unit 1420, and the third magnet unit 1440 (e.g., a bridge magnet unit) are illustrated to be in an angular form. Not limited thereto, corner portions of the first magnet unit 1410, the second magnet unit 1420, and the third magnet unit 1440 (e.g., a bridge magnet unit) may be formed to have a rounded shape.

For example, the third magnet unit 1440 (e.g., a bridge magnet unit) is disposed at an upper portion of the first magnet unit 1410 and the second magnet unit 1420, so that a radiation direction of a magnetic force generated by the magnetic unit 1400 itself may be made to be directed toward a horizontal direction (e.g., an x-axis direction or a y-axis direction) of the electronic device 400. In addition, a radiation direction of a magnetic force generated in the wireless charging module 410 may be made to be directed toward the horizontal direction (e.g., the x-axis direction or the y-axis direction) of the electronic device 400.

For example, a radiation direction of a magnetic force generated by the magnetic unit 1400 itself may be directed from the first magnet unit 1410 to the third magnet unit 1440 (e.g., a bridge magnet unit), and may be directed from the third magnet unit 1440 (e.g., a bridge magnet unit) to the second magnet unit 1420. Conversely, a radiation direction of a magnetic force generated by the magnetic unit 1400 itself may be directed from the second magnet unit 1420 to the third magnet unit 1440 (e.g., a bridge magnet unit), and may be directed from the third magnet unit 1440 (e.g., a bridge magnet unit) to the first magnet unit 1410.

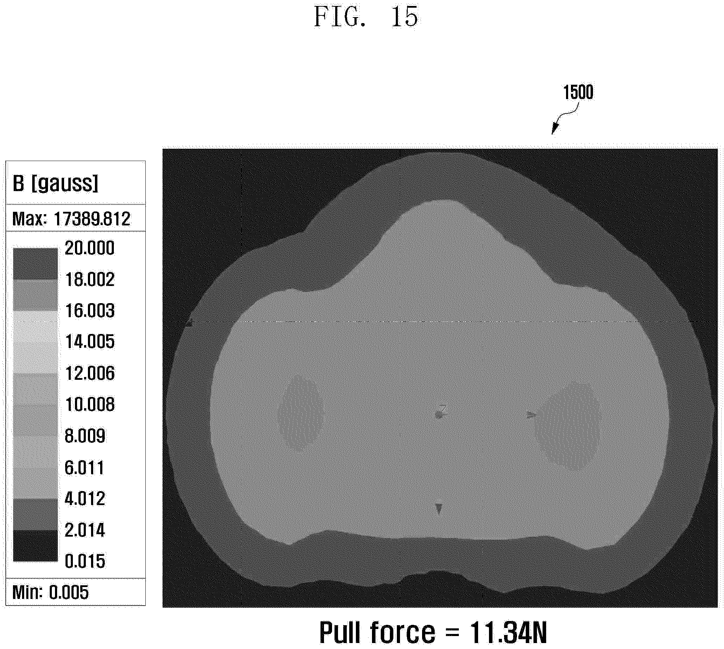

FIG. 15 is a view 1500 illustrating an influence of a magnetic force generated in a magnetic unit according to one embodiment of the present disclosure.

With reference to FIG. 15, when the magnetic unit 1301 (e.g., a magnet unit, a magnet structure, a magnetic structure) of FIG. 13 or the magnetic unit 1400 (e.g., a magnet unit, a magnet structure, a magnetic structure) of FIG. 14 is applied, a magnetic force directed to a vertical direction (e.g., a z-axis direction) of an electronic device (e.g., a wireless power receiving device) may be reduced. In this case, by maintaining (or improving) an attraction (Pull force) between the electronic device (e.g., a wireless power receiving device) and a wireless power transmitting device (e.g., the second electronic device 202 of FIG. 2) (e.g., full force=11.34N), an alignment performance of a coil may be increased. In addition, when the magnetic unit 1301 (e.g., a magnet unit, a magnet structure, a magnetic structure) of FIG. 13 or the magnetic unit 1400 (e.g., a magnet unit, a magnet structure, a magnetic structure) of FIG. 14 is applied, by reducing a magnetic force directed to a vertical direction (e.g., a z-axis direction) of an electronic device (e.g., a wireless power receiving device), an influence on driving of electronic components (e.g., a digitizer, a camera module) disposed inside the electronic device (e.g., a wireless power receiving device) may be reduced.

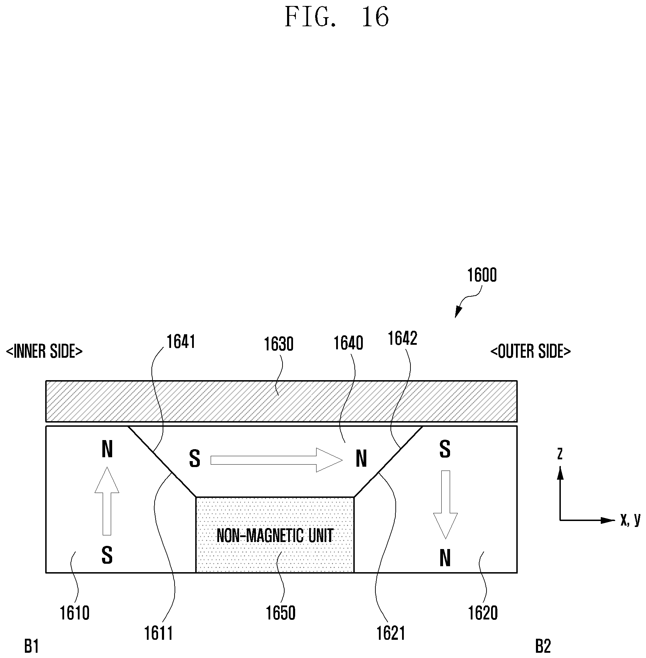

FIG. 16 is a view illustrating a magnetic unit structure according to one embodiment of the present disclosure.

With reference to FIG. 16, a wireless charging module (e.g., the wireless charging module 410 of FIG. 4) of an electronic device (e.g., the electronic device 101 of FIG. 1, the electronic device 400 of FIG. 4) of the present disclosure may include a magnetic unit 1600 (e.g., a magnet unit, a magnet structure, a magnetic structure).

According to one embodiment, the magnetic unit 1600 according to one embodiment of the present disclosure (e.g., a magnet unit, a magnet structure, a magnetic structure) may include a plurality of magnet units 1610, 1620, and 1640, and a non-magnetic unit 1650. At an upper portion of the magnetic unit 1600 (e.g., a magnet unit, a magnet structure, a magnetic structure), a shielding part 1630 may be disposed.

The magnetic unit 1600 (e.g., a magnet unit, a magnet structure, a magnetic structure) according to one embodiment of the present disclosure may be disposed in a composite form in which a plurality of magnet units 1610, 1620, and 1640 are disposed (e.g., in a 'U'-shaped or 'V'-shaped form).

According to one embodiment, the magnetic unit 1600 (e.g., a magnet unit, a magnet structure, a magnetic structure) may include a first magnet unit 1610, a second magnet unit 1620, and a third magnet unit 1640 (e.g., a bridge magnet unit).

For example, the first magnet unit 1610 and the second magnet unit 1620 may be disposed to align a coil (e.g., the coil 411 of FIG. 5) of an electronic device (e.g., a wireless power receiving device) and a coil of a wireless power transmitting device (e.g., the second electronic device 202 of FIG. 2).

For example, the third magnet unit 1640 (e.g., a bridge magnet unit) may be disposed to form a radiation direction of a magnetic force generated by the magnetic unit 1600 (e.g., a magnet unit, a magnet structure, a magnetic structure) itself in a horizontal direction (an x-axis direction or a y-axis direction) (e.g., an x-axis direction or a y-axis direction of FIG. 6) of the electronic device 400.

For example, the first magnet unit 1610 may be disposed so that a first polarity (e.g., an S pole) and a second polarity (e.g., an N pole) are formed in a vertical direction (e.g., a z-axis direction) of the electronic device 400.

For example, the second magnet unit 1620 may be disposed so that a first polarity (e.g., an S pole) and a second polarity (e.g., an N pole) are formed in a vertical direction (e.g., a z-axis direction) of the electronic device 400.

For example, so as to have a polarity opposite to a polarity of the first magnet unit 1610 and a polarity of the second magnet unit 1620 of the magnetic unit 1600 (e.g., a magnet unit, a magnet structure, a magnetic structure) of the electronic device (e.g., a wireless power receiving device), a magnetic unit (the magnetic unit 1302 of FIG. 13) of a wireless power transmitting device (e.g., the second electronic device 202 of FIG. 2) may be disposed. By the magnetic unit 1600 (e.g., a magnet unit, a magnet structure, a magnetic structure) of the electronic device (e.g., a wireless power receiving device) and the magnetic unit 1302 of the wireless power transmitting device (e.g., a second electronic device 202 of FIG. 2), a coil of the electronic device (e.g., a wireless power receiving device) and a coil of the wireless power transmitting device (e.g., a second electronic device 202 of FIG. 2) may be aligned (e.g., aligned to be overlapped in a z-axis direction).

For example, the first magnet unit 1610 and the second magnet unit 1620 may be disposed at a predetermined interval. Between the first magnet unit 1610 and the second magnet unit 1620, the third magnet unit 1640 (e.g., a bridge magnet unit) and the non-magnetic unit 1650 may be disposed.

For example, at least some of one side surface 1611 of the first magnet unit 1610 may be formed to be inclined at a predetermined angle (e.g., oblique). For example, a cross-section of the first magnet unit 1610 may be formed in a pentagonal shape (or a polygonal shape other than a pentagon).

For example, at least some of one side surface 1621 of the second magnet unit 1620 may be formed to be inclined at a predetermined angle (e.g., oblique). For example, a cross-section of the second magnet unit 1620 may be formed in a pentagonal shape (or a polygonal shape other than a pentagon).

For example, the third magnet unit 1640 (e.g., a bridge magnet unit) may be disposed so that a first polarity (e.g., an S pole) and a second polarity (e.g., an N pole) are formed in a horizontal direction (e.g., an x-axis direction or a y-axis direction) of the electronic device 400.

For example, a first side surface 1641 of the third magnet unit 1640 (e.g., a bridge magnet unit) may be formed to be inclined at a predetermined angle (e.g., oblique). For example, a second side surface 1642 of the third magnet unit 1640 (e.g., a bridge magnet unit) may be formed to be inclined at a predetermined angle (e.g., oblique).

For example, the non-magnetic unit 1650 may be disposed at a lower portion of the third magnet unit 1640. For example, the non-magnetic unit 1650 may be disposed to be adjacent to a magnetic unit (e.g., the magnetic unit 1302 of FIG. 13) of a wireless power transmitting device (e.g., the second electronic device 202 of FIG. 2).

For example, the third magnet unit 1640 (e.g., a bridge magnet unit) may be disposed at an upper portion of the non-magnetic unit 1650.

For example, when the magnetic unit 1600 (e.g., a magnet unit, a magnet structure, a magnetic structure) is viewed in the horizontal direction (e.g., the x-axis direction or the y-axis direction) of the electronic device 400, at least some of one side surface 1611 of the first magnet unit 1610 and a first side surface 1641 of the third magnet unit 1640 (e.g., a bridge magnet unit) may be disposed to be overlapped (e.g., to be in contact). For example, a portion where at least some of a one side surface 1611 of the first magnet unit 1610 and the first side surface 1641 of the third magnet unit 1640 (e.g., a bridge magnet unit) are in contact may form an inclined surface.

For example, when the magnetic unit 1600 (e.g., a magnet unit, a magnet structure, a magnetic structure) is viewed in the horizontal direction (e.g., the x-axis direction or the y-axis direction) of the electronic device 400, at least some of one side surface 1621 of the second magnet unit 1620 and a second side surface 1642 of the third magnet unit 1640 (e.g., a bridge magnet unit) may be disposed to be overlapped (e.g., to be in contact).

For example, a portion where at least some of a one side surface 1621 of the second magnet unit 1620 and the second side surface 1642 of the third magnet unit 1640 (e.g., a bridge magnet unit) are in contact may form an inclined surface.

For example, in FIG. 16, the first magnet unit 1610, the second magnet unit 1620, and the third magnet unit 1640 (e.g., a bridge magnet unit) are illustrated to be in an angular form. Not limited thereto, corner portions of the first magnet unit 1610, the second magnet unit 1620, and the third magnet unit 1640 (e.g., a bridge magnet unit) may be formed to have a rounded shape.

For example, the third magnet unit 1640 (e.g., a bridge magnet unit) may be disposed between the first magnet unit 1610 and the second magnet unit 1620, so that a radiation direction of a magnetic force generated by the magnetic unit 1600 itself may be made to be directed toward a horizontal direction (e.g., an x-axis direction or a y-axis direction) of the electronic device 400. In addition, a radiation direction of a magnetic force generated in the wireless charging module 410 may be made to be directed toward the horizontal direction (e.g., the x-axis direction or the y-axis direction) of the electronic device 400.

For example, a radiation direction of a magnetic force generated by the magnetic unit 1600 itself may be directed from the first magnet unit 1610 to the third magnet unit 1640 (e.g., a bridge magnet unit), and may be directed from the third magnet unit 1640 (e.g., a bridge magnet unit) to the second magnet unit 1620. Conversely, a radiation direction of a magnetic force generated by the magnetic unit 1600 itself may be directed from the second magnet unit 1620 to the third magnet unit 1640 (e.g., a bridge magnet unit), and may be directed from the third magnet unit 1640 (e.g., a bridge magnet unit) to the first magnet unit 1610.

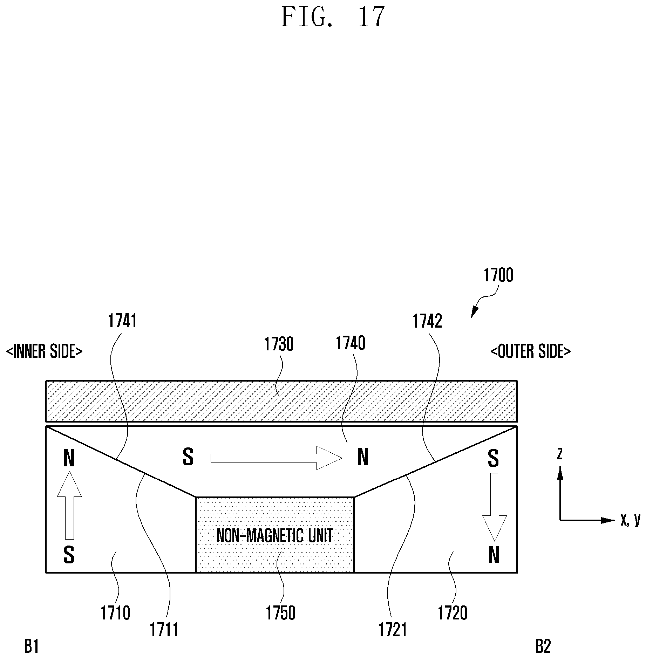

FIG. 17 is a view illustrating a magnetic unit structure according to one embodiment of the present disclosure.

With reference to FIG. 17, a wireless charging module (e.g., the wireless charging module 410 of FIG. 4) of an electronic device (e.g., the electronic device 101 of FIG. 1, the electronic device 400 of FIG. 4) of the present disclosure may include a magnetic unit 1700 (e.g., a magnet unit, a magnet structure, a magnetic structure).

According to one embodiment, the magnetic unit 1700 according to one embodiment of the present disclosure (e.g., a magnet unit, a magnet structure, a magnetic structure) may include a plurality of magnet units 1710, 1720, and 1740, and a non-magnetic unit 1750. At an upper portion of the magnetic unit 1700 (e.g., a magnet unit, a magnet structure, a magnetic structure), a shielding part 1730 may be disposed.

The magnetic unit 1700 (e.g., a magnet unit, a magnet structure, a magnetic structure) according to one embodiment of the present disclosure may be disposed in a composite form in which a plurality of magnet units 1710, 1720, and 1740 are disposed (e.g., in a 'U'-shaped or 'V'-shaped form).

According to one embodiment, the magnetic unit 1700 (e.g., a magnet unit, a magnet structure, a magnetic structure) may include a first magnet unit 1710, a second magnet unit 1720, and a third magnet unit 1740 (e.g., a bridge magnet unit).

For example, the first magnet unit 1710 and the second magnet unit 1720 may be disposed to align a coil (e.g., the coil 411 of FIG. 5) of an electronic device (e.g., a wireless power receiving device) and a coil of a wireless power transmitting device (e.g., the second electronic device 202 of FIG. 2).

For example, the third magnet unit 1740 (e.g., a bridge magnet unit) may be disposed to form a radiation direction of a magnetic force generated by the magnetic unit 1700 (e.g., a magnet unit, a magnet structure, a magnetic structure) itself in a horizontal direction (an x-axis direction or a y-axis direction) (e.g., an x-axis direction or a y-axis direction of FIG. 6) of the electronic device 400.

For example, the first magnet unit 1710 may be disposed so that a first polarity (e.g., an S pole) and a second polarity (e.g., an N pole) are formed in a vertical direction (e.g., a z-axis direction) of the electronic device 400.

For example, the second magnet unit 1720 may be disposed so that a first polarity (e.g., an S pole) and a second polarity (e.g., an N pole) are formed in a vertical direction (e.g., a z-axis direction) of the electronic device 400.

For example, so as to have a polarity opposite to a polarity of the first magnet unit 1710 and a polarity of the second magnet unit 1720 of the magnetic unit 1700 (e.g., a magnet unit, a magnet structure, a magnetic structure) of the electronic device (e.g., a wireless power receiving device), a magnetic unit (the magnetic unit 1302 of FIG. 13) of a wireless power transmitting device (e.g., the second electronic device 202 of FIG. 2) may be disposed. By the magnetic unit 1700 (e.g., a magnet unit, a magnet structure, a magnetic structure) of the electronic device (e.g., a wireless power receiving device) and the magnetic unit 1302 of the wireless power transmitting device (e.g., a second electronic device 202 of FIG. 2), a coil of the electronic device (e.g., a wireless power receiving device) and a coil of the wireless power transmitting device (e.g., a second electronic device 202 of FIG. 2) may be aligned (e.g., aligned to be overlapped in a z-axis direction).

For example, the first magnet unit 1710 and the second magnet unit 1720 may be disposed at a predetermined interval. Between the first magnet unit 1710 and the second magnet unit 1720, the third magnet unit 1740 (e.g., a bridge magnet unit) and the non-magnetic unit 1750 may be disposed.

For example, an upper surface 1711 of the first magnet unit 1710 may be formed to be inclined at a predetermined angle (e.g., oblique). For example, a cross-section of the first magnet unit 1710 may be formed in a quadrilateral shape (or in a polygonal shape other than a quadrilateral).

For example, an upper surface 1721 of the second magnet unit 1720 may be formed to be inclined at a predetermined angle (e.g., oblique). For example, a cross-section of the second magnet unit 1720 may be formed in a quadrilateral shape (or in a polygonal shape other than a quadrilateral).

For example, the third magnet unit 1740 (e.g., a bridge magnet unit) may be disposed so that a first polarity (e.g., an S pole) and a second polarity (e.g., an N pole) are formed in a horizontal direction (e.g., an x-axis direction or a y-axis direction) of the electronic device 400.

For example, a first side surface 1741 of the third magnet unit 1740 (e.g., a bridge magnet unit) may be formed to be inclined at a predetermined angle (e.g., oblique). For example, a second side surface 1742 of the third magnet unit 1740 (e.g., a bridge magnet unit) may be formed to be inclined at a predetermined angle (e.g., oblique).

For example, the non-magnetic unit 1750 may be disposed at a lower portion of the third magnet unit 1740. For example, the non-magnetic unit 1750 may be disposed to be adjacent to a magnetic unit (e.g., the magnetic unit 1302 of FIG. 13) of a wireless power transmitting device (e.g., the second electronic device 202 of FIG. 2).

For example, the third magnet unit 1740 (e.g., a bridge magnet unit) may be disposed at an upper portion of the non-magnetic unit 1750.

For example, when the magnetic unit 1700 (e.g., a magnet unit, a magnet structure, a magnetic structure) is viewed in a horizontal direction (e.g., an x-axis direction or a y-axis direction) of the electronic device 400, the upper surface 1711 of the first magnet unit 1710 and the first side surface 1741 of the third magnet unit 1740 (e.g., a bridge magnet unit) may be disposed to be overlapped (e.g., to be in contact). For example, a portion where the upper surface 1711 of the first magnet unit 1710 and the first side surface 1741 of the third magnet unit 1740 (e.g., a bridge magnet unit) are in contact may form an inclined surface.

For example, when the magnetic unit 1700 (e.g., a magnet unit, a magnet structure, a magnetic structure) is viewed in the horizontal direction (e.g., the x-axis direction or the y-axis direction) of the electronic device 400, the upper surface 1721 of the second magnet unit 1720 and the second side surface 1742 of the third magnet unit 1740 (e.g., a bridge magnet unit) may be disposed to be overlapped (e.g., to be in contact).

For example, a portion where the upper surface 1721 of the second magnet unit 1720 and the second side surface 1742 of the third magnet unit 1740 (e.g., a bridge magnet unit) are in contact may form an inclined surface.

For example, in FIG. 17, the first magnet unit 1710, the second magnet unit 1720, and the third magnet unit 1740 (e.g., a bridge magnet unit) are illustrated to be in an angular form. Not limited thereto, corner portions of the first magnet unit 1710, the second magnet unit 1720, and the third magnet unit 1740 (e.g., a bridge magnet unit) may be formed to have a rounded shape.

For example, the third magnet unit 1740 (e.g., a bridge magnet unit) may be disposed between the first magnet unit 1710 and the second magnet unit 1720, so that a radiation direction of a magnetic force generated by the magnetic unit 1700 itself may be made to be directed toward a horizontal direction (e.g., an x-axis direction or a y-axis direction) of the electronic device 400. In addition, a radiation direction of a magnetic force generated in the wireless charging module 410 may be made to be directed toward the horizontal direction (e.g., the x-axis direction or the y-axis direction) of the electronic device 400.

For example, a radiation direction of a magnetic force generated by the magnetic unit 1700 itself may be directed from the first magnet unit 1710 to the third magnet unit 1740 (e.g., a bridge magnet unit), and may be directed from the third magnet unit 1740 (e.g., a bridge magnet unit) to the second magnet unit 1720. Conversely, a radiation direction of a magnetic force generated by the magnetic unit 1700 itself may be directed from the second magnet unit 1720 to the third magnet unit 1740 (e.g., a bridge magnet unit), and may be directed from the third magnet unit 1740 (e.g., a bridge magnet unit) to the first magnet unit 1710.

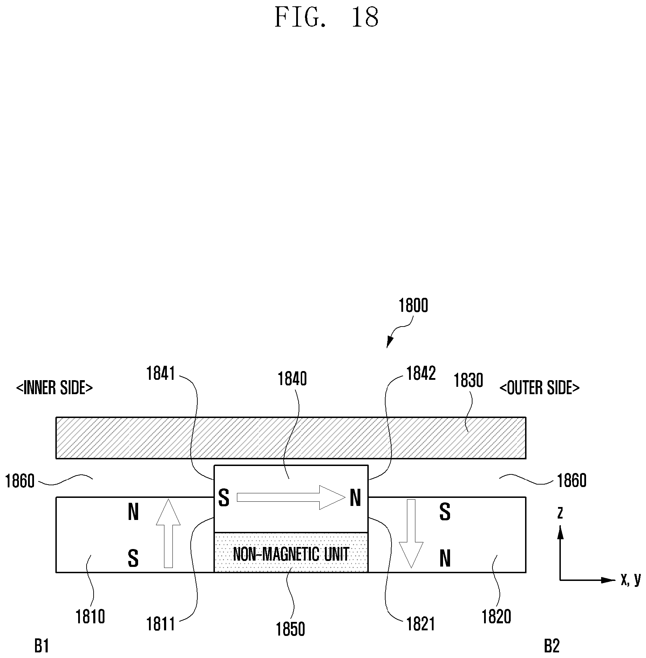

FIG. 18 is a view illustrating a magnetic unit structure according to one embodiment of the present disclosure.

With reference to FIG. 18, a wireless charging module (e.g., the wireless charging module 410 of FIG. 4) of an electronic device (e.g., the electronic device 101 of FIG. 1, the electronic device 400 of FIG. 4) of the present disclosure may include a magnetic unit 1800 (e.g., a magnet unit, a magnet structure, a magnetic structure).

According to one embodiment, the magnetic unit 1800 according to one embodiment of the present disclosure (e.g., a magnet unit, a magnet structure, a magnetic structure) may include a plurality of magnet units 1810, 1820, and 1840, and a non-magnetic unit 1850. At an upper portion of the magnetic unit 1800 (e.g., a magnet unit, a magnet structure, a magnetic structure), a shielding part 1830 may be disposed.

The magnetic unit 1800 (e.g., a magnet unit, a magnet structure, a magnetic structure) according to one embodiment of the present disclosure may be disposed in a composite form in which a plurality of magnet units 1810, 1820, and 1840 are disposed (e.g., in a 'U'-shaped or 'V'-shaped form).

According to one embodiment, the magnetic unit 1800 (e.g., a magnet unit, a magnet structure, a magnetic structure) may include a first magnet unit 1810, a second magnet unit 1820, and a third magnet unit 1840 (e.g., a bridge magnet unit).

For example, the first magnet unit 1810 and the second magnet unit 1820 may be disposed to align a coil (e.g., the coil 411 of FIG. 5) of an electronic device (e.g., a wireless power receiving device) and a coil of a wireless power transmitting device (e.g., the second electronic device 202 of FIG. 2).

For example, the third magnet unit 1840 (e.g., a bridge magnet unit) may be disposed to form a radiation direction of a magnetic force generated by the magnetic unit 1800 (e.g., a magnet unit, a magnet structure, a magnetic structure) itself in a horizontal direction (an x-axis direction or a y-axis direction) (e.g., an x-axis direction or a y-axis direction of FIG. 6) of the electronic device 400.

For example, the first magnet unit 1810 may be disposed so that a first polarity (e.g., an S pole) and a second polarity (e.g., an N pole) are formed in a vertical direction (e.g., a z-axis direction) of the electronic device 400.

For example, the second magnet unit 1820 may be disposed so that a first polarity (e.g., an S pole) and a second polarity (e.g., an N pole) are formed in a vertical direction (e.g., a z-axis direction) of the electronic device 400.

For example, so as to have a polarity opposite to a polarity of the first magnet unit 1810 and a polarity of the second magnet unit 1820 of the magnetic unit 1800 (e.g., a magnet unit, a magnet structure, a magnetic structure) of the electronic device (e.g., a wireless power receiving device), the magnetic unit 1802 of a wireless power transmitting device (e.g., a second electronic device 202 of FIG. 2) may be disposed. By the magnetic unit 1800 (e.g., a magnet unit, a magnet structure, a magnetic structure) of the electronic device (e.g., a wireless power receiving device) and the magnetic unit 1802 of the wireless power transmitting device (e.g., a second electronic device 202 of FIG. 2), a coil of the electronic device (e.g., a wireless power receiving device) and a coil of the wireless power transmitting device (e.g., a second electronic device 202 of FIG. 2) may be aligned (e.g., aligned to be overlapped in a z-axis direction).

For example, the first magnet unit 1810 and the second magnet unit 1820 may be disposed at a predetermined interval. Between the first magnet unit 1810 and the second magnet unit 1820, the third magnet unit 1840 (e.g., a bridge magnet unit) and the non-magnetic unit 1850 may be disposed.

For example, the first magnet unit 1810 and the second magnet unit 1820 may have the same thickness.

For example, the third magnet unit 1840 (e.g., a bridge magnet unit) may have the same thickness as the first magnet unit 1810 or the second magnet unit 1820. Not limited thereto, the third magnet unit 1840 (e.g., a bridge magnet unit) may be formed to be thicker than the first magnet unit 1810 or the second magnet unit 1820.

For example, by a thickness of the third magnet unit 1840 (e.g., a bridge magnet unit), a gap 1860 may be formed between the first magnet unit 1810 and the shielding part 1830. For example, by the thickness of the third magnet unit 1840 (e.g., the bridge magnet unit), the gap 1860 may be formed between the second magnet unit 1820 and the shielding part 1830.

For example, the gap 1860 between the first magnet unit 1810 and the second magnet unit 1820 and the shielding part 1830 may be left as an empty space. Not limited thereto, a non-magnetic material may be filled in the gap 1860 between the first magnet unit 1810 and the second magnet unit 1820 and the shielding part 1830.

For example, the third magnet unit 1840 (e.g., a bridge magnet unit) may be disposed so that a first polarity (e.g., an S pole) and a second polarity (e.g., an N pole) are formed in a horizontal direction (e.g., an x-axis direction or a y-axis direction) of the electronic device 400.

For example, the non-magnetic unit 1850 may be disposed at a lower portion of the third magnet unit 1840. For example, the non-magnetic unit 1850 may be disposed to be adjacent to the magnetic unit 1802 of the wireless power transmitting device (e.g., the second electronic device 202 of FIG. 2).

For example, the third magnet unit 1840 (e.g., a bridge magnet unit) may be disposed at an upper portion of the non-magnetic unit 1850.

For example, when the magnetic unit 1800 (e.g., a magnet unit, a magnet structure, a magnetic structure) is viewed in a horizontal direction (e.g., an x-axis direction or a y-axis direction) of the electronic device 400, at least some of one side surface 1811 of the first magnet unit 1810 and at least some of a first side surface 1841 of the third magnet unit 1840 (e.g., a bridge magnet unit) may be disposed to be overlapped (e.g., to be in contact).

For example, when the magnetic unit 1800 (e.g., the magnet unit, the magnet structure, the magnetic structure) is viewed in the horizontal direction (e.g., the x-axis direction or the y-axis direction) of the electronic device 400, at least some of one side surface 1821 of the second magnet unit 1820 and at least some of a second side surface 1842 of the third magnet unit 1840 (e.g., a bridge magnet unit) may be disposed to be overlapped (e.g., to be in contact).

For example, in FIG. 18, the first magnet unit 1810, the second magnet unit 1820, and the third magnet unit 1840 (e.g., a bridge magnet unit) are illustrated to be in an angular form. Not limited thereto, corner portions of the first magnet unit 1810, the second magnet unit 1820, and the third magnet unit 1840 (e.g., a bridge magnet unit) may be formed to have a rounded shape.

For example, the third magnet unit 1840 (e.g., a bridge magnet unit) may be disposed between the first magnet unit 1810 and the second magnet unit 1820, so that a radiation direction of a magnetic force generated by the magnetic unit 1800 itself may be made to be directed toward a horizontal direction (e.g., an x-axis direction or a y-axis direction) of the electronic device 400. In addition, a radiation direction of a magnetic force generated in the wireless charging module 410 may be made to be directed toward the horizontal direction (e.g., the x-axis direction or the y-axis direction) of the electronic device 400.

For example, a radiation direction of a magnetic force generated by the magnetic unit 1800 itself may be directed from the first magnet unit 1810 to the third magnet unit 1840 (e.g., a bridge magnet unit), and may be directed from the third magnet unit 1840 (e.g., a bridge magnet unit) to the second magnet unit 1820. Conversely, a radiation direction of a magnetic force generated by the magnetic unit 1800 itself may be directed from the second magnet unit 1820 to the third magnet unit 1840 (e.g., a bridge magnet unit), and may be directed from the third magnet unit 1840 (e.g., a bridge magnet unit) to the first magnet unit 1810.

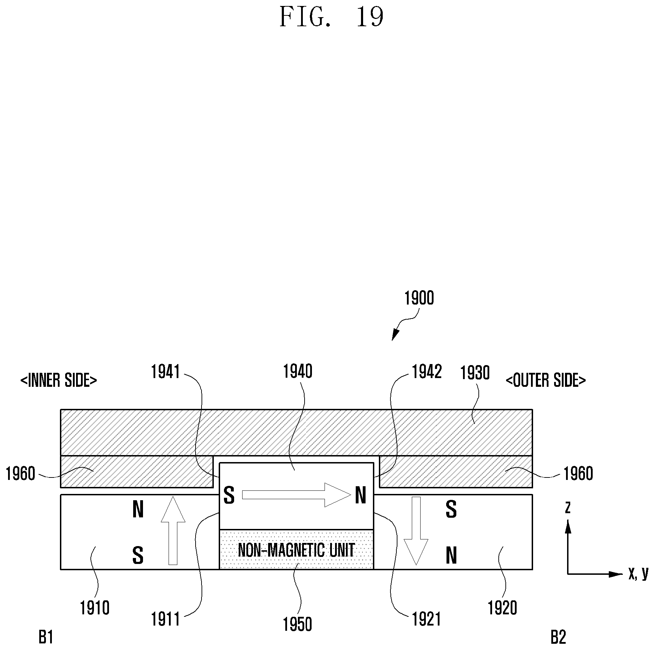

FIG. 19 is a view illustrating a magnetic unit structure according to one embodiment of the present disclosure.

With reference to FIG. 19, a wireless charging module (e.g., the wireless charging module 410 of FIG. 4) of an electronic device (e.g., the electronic device 101 of FIG. 1, the electronic device 400 of FIG. 4) of the present disclosure may include a magnetic unit 1900 (e.g., a magnet unit, a magnet structure, a magnetic structure).

According to one embodiment, the magnetic unit 1900 according to one embodiment of the present disclosure (e.g., a magnet unit, a magnet structure, a magnetic structure) may include a plurality of magnet units 1910, 1920, and 1940, and a non-magnetic unit 1950. At an upper portion of the magnetic unit 1900 (e.g., a magnet unit, a magnet structure, a magnetic structure), a shielding part 1930 may be disposed.

The magnetic unit 1900 (e.g., a magnet unit, a magnet structure, a magnetic structure) according to one embodiment of the present disclosure may be disposed in a composite form in which a plurality of magnet units 1910, 1920, and 1940 are disposed (e.g., in a 'U'-shaped or 'V'-shaped form).

According to one embodiment, the magnetic unit 1900 (e.g., a magnet unit, a magnet structure, a magnetic structure) may include a first magnet unit 1910, a second magnet unit 1920, and a third magnet unit 1940 (e.g., a bridge magnet unit).

For example, the first magnet unit 1910 and the second magnet unit 1920 may be disposed to align a coil (e.g., the coil 411 of FIG. 5) of an electronic device (e.g., a wireless power receiving device) and a coil of a wireless power transmitting device (e.g., the second electronic device 202 of FIG. 2).

For example, the third magnet unit 1940 (e.g., a bridge magnet unit) may be disposed to form a radiation direction of a magnetic force generated by the magnetic unit 1900 (e.g., a magnet unit, a magnet structure, a magnetic structure) itself in a horizontal direction (an x-axis direction or a y-axis direction) (e.g., an x-axis direction or a y-axis direction of FIG. 6) of the electronic device 400.

For example, the first magnet unit 1910 may be disposed so that a first polarity (e.g., an S pole) and a second polarity (e.g., an N pole) are formed in a vertical direction (e.g., a z-axis direction) of the electronic device 400.

For example, the second magnet unit 1920 may be disposed so that a first polarity (e.g., an S pole) and a second polarity (e.g., an N pole) are formed in a vertical direction (e.g., a z-axis direction) of the electronic device 400.

For example, so as to have a polarity opposite to a polarity of the first magnet unit 1910 and a polarity of the second magnet unit 1920 of the magnetic unit 1900 (e.g., a magnet unit, a magnet structure, a magnetic structure) of the electronic device (e.g., a wireless power receiving device), the magnetic unit 1902 of a wireless power transmitting device (e.g., a second electronic device 202 of FIG. 2) may be disposed. By the magnetic unit 1900 (e.g., a magnet unit, a magnet structure, a magnetic structure) of the electronic device (e.g., a wireless power receiving device) and the magnetic unit 1902 of the wireless power transmitting device (e.g., a second electronic device 202 of FIG. 2), a coil of the electronic device (e.g., a wireless power receiving device) and a coil of the wireless power transmitting device (e.g., a second electronic device 202 of FIG. 2) may be aligned (e.g., aligned to be overlapped in a z-axis direction).

For example, the first magnet unit 1910 and the second magnet unit 1920 may be disposed at a predetermined interval. Between the first magnet unit 1910 and the second magnet unit 1920, the third magnet unit 1940 (e.g., a bridge magnet unit) and the non-magnetic unit 1950 may be disposed.

For example, the first magnet unit 1910 and the second magnet unit 1920 may have the same thickness.

For example, the third magnet unit 1940 (e.g., a bridge magnet unit) may have the same thickness as the first magnet unit 1910 or the second magnet unit 1920. Not limited thereto, the third magnet unit 1940 (e.g., a bridge magnet unit) may be formed to be thicker than the first magnet unit 1910 or the second magnet unit 1920.

For example, by a thickness of the third magnet unit 1940 (e.g., a bridge magnet unit), a gap may be formed between the first magnet unit 1910 and the shielding part 1930. For example, by the thickness of the third magnet unit 1940 (e.g., the bridge magnet unit), a gap may be formed between the second magnet unit 1920 and the shielding part 1930.

For example, a structure 1960 (e.g., a shielding part) identical to the shielding part 1930 may be disposed in a gap between the first magnet unit 1910 and the second magnet unit 1920 and the shielding part 1930.

As another example, for instance, a structure 1960 (e.g., a non-magnetic layer) identical to the non-magnetic layer 1950 may be disposed in a gap between the first magnet unit 1910 and the second magnet unit 1920 and the shielding part 1930.

Not limited thereto, a gap between the first magnet unit 1910 and the second magnet unit 1920 and the shielding part 1930 may also be left as an empty space.

For example, the third magnet unit 1940 (e.g., a bridge magnet unit) may be disposed so that a first polarity (e.g., an S pole) and a second polarity (e.g., an N pole) are formed in a horizontal direction (e.g., an x-axis direction or a y-axis direction) of the electronic device 400.

For example, the non-magnetic unit 1950 may be disposed at a lower portion of the third magnet unit 1940. For example, the non-magnetic unit 1950 may be disposed to be adjacent to the magnetic unit 1902 of the wireless power transmitting device (e.g., the second electronic device 202 of FIG. 2).

For example, the third magnet unit 1940 (e.g., a bridge magnet unit) may be disposed at an upper portion of the non-magnetic unit 1950.

For example, when the magnetic unit 1900 (e.g., a magnet unit, a magnet structure, a magnetic structure) is viewed in a horizontal direction (e.g., an x-axis direction or a y-axis direction) of the electronic device 400, at least some of one side surface 1911 of the first magnet unit 1910 and at least some of a first side surface 1941 of the third magnet unit 1940 (e.g., a bridge magnet unit) may be disposed to be overlapped (e.g., to be in contact).

For example, when the magnetic unit 1900 (e.g., the magnet unit, the magnet structure, the magnetic structure) is viewed in the horizontal direction (e.g., the x-axis direction or the y-axis direction) of the electronic device 400, at least some of one side surface 1921 of the second magnet unit 1920 and at least some of a second side surface 1942 of the third magnet unit 1940 (e.g., a bridge magnet unit) may be disposed to be overlapped (e.g., to be in contact).

For example, in FIG. 19, the first magnet unit 1910, the second magnet unit 1920, and the third magnet unit 1940 (e.g., a bridge magnet unit) are illustrated to be in an angular form. Not limited thereto, corner portions of the first magnet unit 1910, the second magnet unit 1920, and the third magnet unit 1940 (e.g., a bridge magnet unit) may be formed to have a rounded shape.

For example, the third magnet unit 1940 (e.g., a bridge magnet unit) may be disposed between the first magnet unit 1910 and the second magnet unit 1920, so that a radiation direction of a magnetic force generated by the magnetic unit 1900 itself may be made to be directed toward a horizontal direction (e.g., an x-axis direction or a y-axis direction) of the electronic device 400. In addition, a radiation direction of a magnetic force generated in the wireless charging module 410 may be made to be directed toward the horizontal direction (e.g., the x-axis direction or the y-axis direction) of the electronic device 400.

For example, a radiation direction of a magnetic force generated by the magnetic unit 1900 itself may be directed from the first magnet unit 1910 to the third magnet unit 1940 (e.g., a bridge magnet unit), and may be directed from the third magnet unit 1940 (e.g., a bridge magnet unit) to the second magnet unit 1920. Conversely, a radiation direction of a magnetic force generated by the magnetic unit 1900 itself may be directed from the second magnet unit 1920 to the third magnet unit 1940 (e.g., a bridge magnet unit), and may be directed from the third magnet unit 1940 (e.g., a bridge magnet unit) to the first magnet unit 1910.

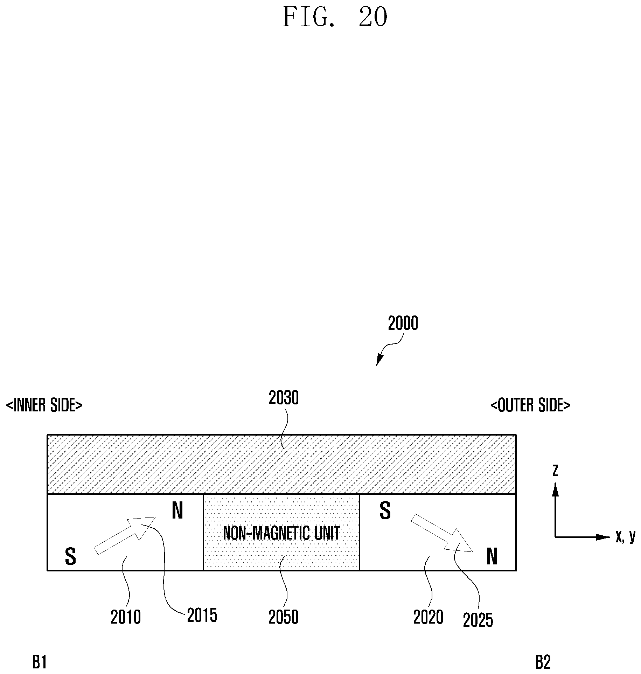

FIG. 20 is a view illustrating a magnetic unit structure according to one embodiment of the present disclosure.

With reference to FIG. 20, a wireless charging module (e.g., the wireless charging module 410 of FIG. 4) of an electronic device (e.g., the electronic device 101 of FIG. 1, the electronic device 400 of FIG. 4) of the present disclosure may include a magnetic unit 2000 (e.g., a magnet unit, a magnet structure, a magnetic structure).

According to one embodiment, the magnetic unit 2000 according to one embodiment of the present disclosure (e.g., a magnet unit, a magnet structure, a magnetic structure) may include a plurality of magnet units 2010 and 2020, and a non-magnetic unit 2050. At an upper portion of the magnetic unit 2000 (e.g., a magnet unit, a magnet structure, a magnetic structure), a shielding part 2030 may be disposed.

The magnetic unit 2000 (e.g., a magnet unit, a magnet structure, a magnetic structure) according to one embodiment of the present disclosure may be disposed in a composite form in which a plurality of magnet units 2010 and 2020 are disposed (e.g., in a 'U'-shaped or 'V'-shaped form).

According to one embodiment, the magnetic unit 2000 (e.g., a magnet unit, a magnet structure, a magnetic structure) may include a first magnet unit 2010, and a second magnet unit 2020.

For example, the first magnet unit 2010 and the second magnet unit 2020 may be disposed to align a coil (e.g., the coil 411 of FIG. 5) of an electronic device (e.g., a wireless power receiving device) and a coil of a wireless power transmitting device (e.g., the second electronic device 202 of FIG. 2).

For example, the first magnet unit 2010 and the second magnet unit 2020 may be disposed to form a radiation direction of a magnetic force generated by the magnetic unit 2000 (e.g., a magnet unit, a magnet structure, a magnetic structure) itself in a horizontal direction (an x-axis or y-axis direction) (e.g., an x-axis or y-axis direction of FIG. 6) of the electronic device 400.

For example, the first magnet unit 2010 may be disposed so that a first polarity (e.g., an S pole) and a second polarity (e.g., an N pole) are formed at a predetermined angle (e.g., an oblique angle) between a vertical direction (e.g., a z-axis direction) and a horizontal direction (e.g., an x-axis or y-axis direction) of the electronic device 400.

For example, the first magnet unit 2010 may be disposed so that a first polarity (e.g., an S pole) and a second polarity (e.g., an N pole) are formed in a first diagonal direction 2015 (e.g., an upward-right direction in FIG. 20) that is offset by a predetermined angle with respect to the vertical direction (e.g., a z-axis direction) of the electronic device 400.

For example, the first magnet unit 2010 may be disposed so that a first polarity (e.g., an S pole) and a second polarity (e.g., an N pole) are formed in the first diagonal direction 2015 (e.g., an upward-right direction in FIG. 20) that is offset by a predetermined angle with respect to a horizontal direction (an x-axis or y-axis direction) of the electronic device 400.

For example, the second magnet unit 2020 may be disposed so that a first polarity (e.g., an S pole) and a second polarity (e.g., an N pole) are formed at a predetermined angle (e.g., an oblique angle) between a vertical direction (e.g., a z-axis direction) and a horizontal direction (e.g., an x-axis or y-axis direction) of the electronic device 400.

For example, the second magnet unit 2020 may be disposed so that a first polarity (e.g., the S pole) and a second polarity (e.g., the N pole) are formed in a second diagonal direction 2025 (e.g., a downward-right direction in FIG. 20) that is offset by a predetermined angle with respect to a vertical direction (e.g., a z-axis direction) of the electronic device 400.

For example, the second magnet unit 2020 may be disposed so that a first polarity (e.g., an S pole) and a second polarity (e.g., an N pole) are formed in the second diagonal direction 2025 (e.g., a downward-right direction in FIG. 20) that is offset by a predetermined angle with respect to a horizontal direction (an x-axis or y-axis direction) of the electronic device 400.

For example, so as to have a polarity opposite to a polarity of the first magnet unit 2010 and a polarity of the second magnet unit 2020 of the magnetic unit 2000 (e.g., a magnet unit, a magnet structure, a magnetic structure) of the electronic device (e.g., a wireless power receiving device), a magnetic unit (the magnetic unit 1302 of FIG. 13) of a wireless power transmitting device (e.g., the second electronic device 202 of FIG. 2) may be disposed. By the magnetic unit 2000 (e.g., a magnet unit, a magnet structure, a magnetic structure) of the electronic device (e.g., a wireless power receiving device) and the magnetic unit 1302 of the wireless power transmitting device (e.g., a second electronic device 202 of FIG. 2), a coil of the electronic device (e.g., a wireless power receiving device) and a coil of the wireless power transmitting device (e.g., a second electronic device 202 of FIG. 2) may be aligned (e.g., aligned to be overlapped in a z-axis direction).

For example, the first magnet unit 2010 and the second magnet unit 2020 may be disposed at a predetermined interval. The non-magnetic unit 2050 may be disposed between the first magnet unit 2010 and the second magnet unit 2020.

For example, a width of the first magnet unit 2010 and a width of the non-magnetic unit 2050 may be substantially the same. For example, the width of the non-magnetic unit 2050 may be wider than the width of the first magnet unit 2010.

For example, a width of the second magnet unit 2020 and a width of the non-magnetic unit 2050 may be substantially the same. For example, the width of the non-magnetic unit 2050 may be wider than the width of the second magnet unit 2010.

For example, the non-magnetic unit 2050 may be disposed at a lower portion of a shielding part 2030. For example, the non-magnetic unit 2050 may be disposed to be adjacent to a magnetic unit (e.g., the magnetic unit 1302 of FIG. 13) of a wireless power transmitting device (e.g., the second electronic device 202 of FIG. 2).

For example, the first magnet unit 2010 and the second magnet unit 2020 may have the same thickness.

For example, in FIG. 20, the first magnet unit 2010 and the second magnet unit 2020 are illustrated to be in an angular form. Not limited thereto, corner portions of the first magnet unit 2010 and the second magnet unit 2020 may be formed to have a rounded shape.

For example, the first magnet unit 2010 and the second magnet unit 2020 may be disposed so that directions of magnetic force are directed in a diagonal (e.g., an oblique) direction offset by a predetermined angle with respect to a z-axis, thereby making a radiation direction of a magnetic force generated by the magnetic unit 2000 itself be directed toward a horizontal direction (e.g., an x-axis or y-axis direction) of the electronic device 400. In addition, a radiation direction of a magnetic force generated in the wireless charging module 410 may be made to be directed toward the horizontal direction (e.g., the x-axis direction or the y-axis direction) of the electronic device 400.

For example, a radiation direction of a magnetic force generated by the magnetic unit 2000 itself may be directed from the first magnet unit 2010 to the shielding part 2030, and may be directed from the shielding part 2030 to the second magnet unit 2020. Conversely, a radiation direction of a magnetic force generated by the magnetic unit 2000 itself may be directed from the second magnet unit 2020 to the shielding part 2030, and may be directed from the shielding part 2030 to the first magnet unit 2010.

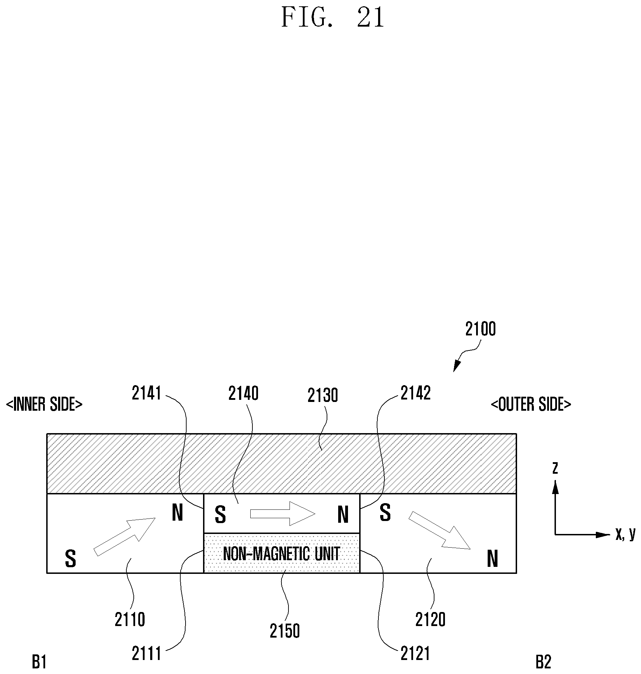

FIG. 21 is a view illustrating a magnetic unit structure according to one embodiment of the present disclosure.

With reference to FIG. 21, a wireless charging module (e.g., the wireless charging module 410 of FIG. 4) of an electronic device (e.g., the electronic device 101 of FIG. 1, the electronic device 400 of FIG. 4) of the present disclosure may include a magnetic unit 2100 (e.g., a magnet unit, a magnet structure, a magnetic structure).

According to one embodiment, the magnetic unit 2100 according to one embodiment of the present disclosure (e.g., a magnet unit, a magnet structure, a magnetic structure) may include a plurality of magnet units 2110, 2120, and 2140, and a non-magnetic unit 2150. At an upper portion of the magnetic unit 2100 (e.g., a magnet unit, a magnet structure, a magnetic structure), a shielding part 2130 may be disposed.

The magnetic unit 2100 (e.g., a magnet unit, a magnet structure, a magnetic structure) according to one embodiment of the present disclosure may be disposed in a composite form in which a plurality of magnet units 2110 and 2120 are disposed (e.g., in a 'U'-shaped or 'V'-shaped form).

According to one embodiment, the magnetic unit 2100 (e.g., a magnet unit, a magnet structure, a magnetic structure) may include a first magnet unit 2110, a second magnet unit 2120, and a third magnet unit 2140 (e.g., a bridge magnet unit).

For example, the first magnet unit 2110 and the second magnet unit 2120 may be disposed to align a coil (e.g., the coil 411 of FIG. 5) of an electronic device (e.g., a wireless power receiving device) and a coil of a wireless power transmitting device (e.g., the second electronic device 212 of FIG. 2).

For example, the first magnet unit 2110, the second magnet unit 2120, and the third magnet unit 2140 (e.g., a bridge magnet unit) may be disposed to form a radiation direction of a magnetic force generated by the magnetic unit 2100 (e.g., a magnet unit, a magnet structure, a magnetic structure) itself in a horizontal direction (an x-axis or y-axis direction) (e.g., an x-axis or y-axis direction of FIG. 6) of the electronic device 400.

For example, the first magnet unit 2110 may be disposed so that a first polarity (e.g., an S pole) and a second polarity (e.g., an N pole) are formed at a predetermined angle (e.g., an oblique angle) between a vertical direction (e.g., a z-axis direction) and a horizontal direction (e.g., an x-axis or y-axis direction) of the electronic device 400.

For example, the first magnet unit 2110 may be disposed so that a first polarity (e.g., an S pole) and a second polarity (e.g., an N pole) are formed in a diagonal direction offset by a predetermined angle with respect to a vertical direction (e.g., a z-axis direction) of the electronic device 400.

For example, the first magnet unit 2110 may be disposed so that a first polarity (e.g., an S pole) and a second polarity (e.g., an N pole) are formed in a diagonal direction offset by a predetermined angle with respect to a horizontal direction (an x-axis or y-axis direction) of the electronic device 400.

For example, the second magnet unit 2120 may be disposed so that a first polarity (e.g., an S pole) and a second polarity (e.g., an N pole) are formed at a predetermined angle (e.g., an oblique angle) between a vertical direction (e.g., a z-axis direction) and a horizontal direction (e.g., an x-axis or y-axis direction) of the electronic device 400.

For example, the second magnet unit 2120 may be disposed so that a first polarity (e.g., an S pole) and a second polarity (e.g., an N pole) are formed in a diagonal direction offset by a predetermined angle with respect to a vertical direction (e.g., a z-axis direction) of the electronic device 400.

For example, the second magnet unit 2120 may be disposed so that a first polarity (e.g., an S pole) and a second polarity (e.g., an N pole) are formed in a diagonal direction offset by a predetermined angle with respect to a horizontal direction (an x-axis or y-axis direction) of the electronic device 400.

For example, so as to have a polarity opposite to a polarity of the first magnet unit 2110 and a polarity of the second magnet unit 2120 of the magnetic unit 2100 (e.g., a magnet unit, a magnet structure, a magnetic structure) of the electronic device (e.g., a wireless power receiving device), a magnetic unit (the magnetic unit 1302 of FIG. 13) of a wireless power transmitting device (e.g., the second electronic device 212 of FIG. 2) may be disposed. By the magnetic unit 2100 (e.g., a magnet unit, a magnet structure, a magnetic structure) of the electronic device (e.g., a wireless power receiving device) and the magnetic unit 1302 of the wireless power transmitting device (e.g., a second electronic device 212 of FIG. 2), a coil of the electronic device (e.g., a wireless power receiving device) and a coil of the wireless power transmitting device (e.g., a second electronic device 212 of FIG. 2) may be aligned (e.g., aligned to be overlapped in a z-axis direction).

For example, the first magnet unit 2110 and the second magnet unit 2120 may be disposed at a predetermined interval. Between the first magnet unit 2110 and the second magnet unit 2120, the third magnet unit 2140 (e.g., a bridge magnet unit) and the non-magnetic unit 2150 may be disposed.

For example, the non-magnetic unit 2150 may be disposed at a lower portion of a shielding part 2130. For example, the non-magnetic unit 2150 may be disposed to be adjacent to a magnetic unit (e.g., the magnetic unit 1302 of FIG. 13) of a wireless power transmitting device (e.g., the second electronic device 212 of FIG. 2).

For example, the first magnet unit 2110 and the second magnet unit 2120 may have the same thickness.

For example, the third magnet unit 2140 (e.g., a bridge magnet unit) may have a thickness thinner than the first magnet unit 2110 or the second magnet unit 2120.

For example, the third magnet unit 2140 (e.g., a bridge magnet unit) may be disposed so that a first polarity (e.g., an S pole) and a second polarity (e.g., an N pole) are formed in a horizontal direction (e.g., an x-axis direction or a y-axis direction) of the electronic device 400.

For example, the non-magnetic unit 2150 may be disposed at a lower portion of the third magnet unit 2140 (e.g., a bridge magnet unit). For example, the non-magnetic unit 2150 may be disposed to be adjacent to the magnetic unit 1302 of the wireless power transmitting device (e.g., the second electronic device 202 of FIG. 2).

For example, the third magnet unit 2140 (e.g., a bridge magnet unit) may be disposed at an upper portion of the non-magnetic unit 2150.

For example, when the magnetic unit 2100 (e.g., a magnet unit, a magnet structure, a magnetic structure) is viewed in the horizontal direction (e.g., the x-axis direction or the y-axis direction) of the electronic device 400, at least some of one side surface 2111 of the first magnet unit 2110 and a first side surface 2141 of the third magnet unit 2140 (e.g., a bridge magnet unit) may be disposed to be overlapped (e.g., to be in contact).

For example, when the magnetic unit 2100 (e.g., a magnet unit, a magnet structure, a magnetic structure) is viewed in the horizontal direction (e.g., the x-axis direction or the y-axis direction) of the electronic device 400, at least some of one side surface 2121 of the second magnet unit 2120 and a second side surface 2142 of the third magnet unit 2140 (e.g., a bridge magnet unit) may be disposed to be overlapped (e.g., to be in contact).

For example, in FIG. 21, the first magnet unit 2110, the second magnet unit 2120, and the third magnet unit 2140 (e.g., a bridge magnet unit) are illustrated to be in an angular form. Not limited thereto, corner portions of the first magnet unit 2110, the second magnet unit 2120, and the third magnet unit 2130 (e.g., a bridge magnet unit) may be formed to have a rounded shape.

For example, the first magnet unit 2110 and the second magnet unit 2120 may be disposed so that directions of magnetic force are directed in a diagonal (e.g., an oblique) direction offset by a predetermined angle with respect to a z-axis, thereby making a radiation direction of a magnetic force generated by the magnetic unit 2100 itself be directed toward a horizontal direction (e.g., an x-axis or y-axis direction) of the electronic device 400. In addition, a radiation direction of a magnetic force generated in the wireless charging module 410 may be made to be directed toward the horizontal direction (e.g., the x-axis direction or the y-axis direction) of the electronic device 400.

For example, a radiation direction of a magnetic force generated by the magnetic unit 2100 itself may be directed from the first magnet unit 2110 to the third magnet unit 2140 (e.g., a bridge magnet unit), and may be directed from the third magnet unit 2140 (e.g., a bridge magnet unit) to the second magnet unit 2120. Conversely, a radiation direction of a magnetic force generated by the magnetic unit 2100 itself may be directed from the second magnet unit 2120 to the third magnet unit 2140 (e.g., a bridge magnet unit), and may be directed from the third magnet unit 2140 (e.g., a bridge magnet unit) to the first magnet unit 2110.

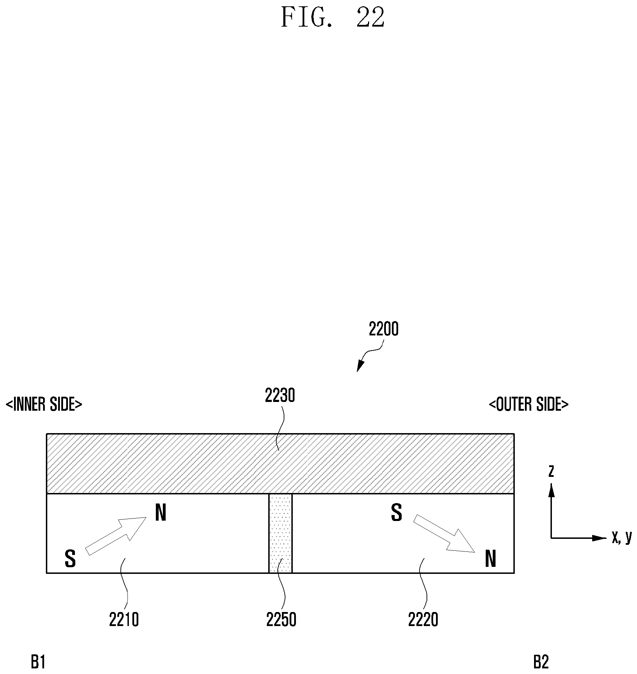

FIG. 22 is a view illustrating a magnetic unit structure according to one embodiment of the present disclosure.

With reference to FIG. 22, a wireless charging module (e.g., the wireless charging module 410 of FIG. 4) of an electronic device (e.g., the electronic device 101 of FIG. 1, the electronic device 400 of FIG. 4) of the present disclosure may include a magnetic unit 2200 (e.g., a magnet unit, a magnet structure, a magnetic structure).

According to one embodiment, the magnetic unit 2200 according to one embodiment of the present disclosure (e.g., a magnet unit, a magnet structure, a magnetic structure) may include a plurality of magnet units 2210 and 2220, and a non-magnetic unit 2250. At an upper portion of the magnetic unit 2200 (e.g., a magnet unit, a magnet structure, a magnetic structure), a shielding part 2230 may be disposed.

The magnetic unit 2200 (e.g., a magnet unit, a magnet structure, a magnetic structure) according to one embodiment of the present disclosure may be disposed in a composite form in which a plurality of magnet units 2210 and 2220 are disposed (e.g., in a 'U'-shaped or 'V'-shaped form).

According to one embodiment, the magnetic unit 2200 (e.g., a magnet unit, a magnet structure, a magnetic structure) may include a first magnet unit 2210, and a second magnet unit 2220.

For example, the first magnet unit 2210 and the second magnet unit 2220 may be disposed to align a coil (e.g., the coil 411 of FIG. 5) of an electronic device (e.g., a wireless power receiving device) and a coil of a wireless power transmitting device (e.g., the second electronic device 202 of FIG. 2).

For example, the first magnet unit 2210 and the second magnet unit 2220 may be disposed to form a radiation direction of a magnetic force generated by the magnetic unit 2200 (e.g., a magnet unit, a magnet structure, a magnetic structure) itself in a horizontal direction (an x-axis or y-axis direction) (e.g., an x-axis or y-axis direction of FIG. 6) of the electronic device 400.

For example, the first magnet unit 2210 may be disposed so that a first polarity (e.g., an S pole) and a second polarity (e.g., an N pole) are formed at a predetermined angle (e.g., an oblique angle) between a vertical direction (e.g., a z-axis direction) and a horizontal direction (e.g., an x-axis or y-axis direction) of the electronic device 400.

For example, the first magnet unit 2210 may be disposed so that a first polarity (e.g., an S pole) and a second polarity (e.g., an N pole) are formed in a diagonal direction offset by a predetermined angle with respect to a vertical direction (e.g., a z-axis direction) of the electronic device 400.

For example, the first magnet unit 2210 may be disposed so that a first polarity (e.g., an S pole) and a second polarity (e.g., an N pole) are formed in a diagonal direction (e.g., an upward-right direction in FIG. 22) that is offset by a predetermined angle with respect to a horizontal direction (an x-axis or y-axis direction) of the electronic device 400.

For example, the second magnet unit 2220 may be disposed so that a first polarity (e.g., an S pole) and a second polarity (e.g., an N pole) are formed at a predetermined angle (e.g., an oblique angle) between a vertical direction (e.g., a z-axis direction) and a horizontal direction (e.g., an x-axis or y-axis direction) of the electronic device 400.

For example, the second magnet unit 2220 may be disposed so that a first polarity (e.g., the S pole) and a second polarity (e.g., the N pole) are formed in a diagonal direction (e.g., a downward-right direction in FIG. 22) that is offset by a predetermined angle with respect to a vertical direction (e.g., a z-axis direction) of the electronic device 400.

For example, the second magnet unit 2220 may be disposed so that a first polarity (e.g., an S pole) and a second polarity (e.g., an N pole) are formed in a diagonal direction offset by a predetermined angle with respect to a horizontal direction (an x-axis or y-axis direction) of the electronic device 400.

For example, so as to have a polarity opposite to a polarity of the first magnet unit 2210 and a polarity of the second magnet unit 2220 of the magnetic unit 2200 (e.g., a magnet unit, a magnet structure, a magnetic structure) of the electronic device (e.g., a wireless power receiving device), a magnetic unit (the magnetic unit 1302 of FIG. 13) of a wireless power transmitting device (e.g., the second electronic device 202 of FIG. 2) may be disposed. By the magnetic unit 2200 (e.g., a magnet unit, a magnet structure, a magnetic structure) of the electronic device (e.g., a wireless power receiving device) and the magnetic unit 1302 of the wireless power transmitting device (e.g., a second electronic device 202 of FIG. 2), a coil of the electronic device (e.g., a wireless power receiving device) and a coil of the wireless power transmitting device (e.g., a second electronic device 202 of FIG. 2) may be aligned (e.g., aligned to be overlapped in a z-axis direction).

For example, the first magnet unit 2210 and the second magnet unit 2220 may be disposed at a predetermined interval. A width between the first magnet unit 2210 and the second magnet unit 2220 may be formed to be narrower compared to a width of the first magnet unit 2210 or the second magnet unit 2220.

For example, the non-magnetic unit 2250 may be disposed between the first magnet unit 2210 and the second magnet unit 2220.

For example, the width of the non-magnetic unit 2250 may be formed to be narrower than the width of the first magnet unit 2210.

For example, the width of the non-magnetic unit 2250 may be formed to be narrower than the width of the second magnet unit 2220.

For example, the non-magnetic unit 2250 may be disposed at a lower portion of a shielding part 2230. For example, the non-magnetic unit 2250 may be disposed to be adjacent to a magnetic unit (e.g., the magnetic unit 1302 of FIG. 13) of a wireless power transmitting device (e.g., the second electronic device 202 of FIG. 2).

For example, the first magnet unit 2210 and the second magnet unit 2220 may have the same thickness.

For example, in FIG. 20, the first magnet unit 2210 and the second magnet unit 2220 are illustrated to be in an angular form. Not limited thereto, corner portions of the first magnet unit 2210 and the second magnet unit 2220 may be formed to have a rounded shape.

For example, the first magnet unit 2210 and the second magnet unit 2220 may be disposed so that directions of magnetic force are directed in a diagonal (e.g., an oblique) direction offset by a predetermined angle with respect to a z-axis, thereby making a radiation direction of a magnetic force generated by the magnetic unit 2200 itself be directed toward a horizontal direction (e.g., an x-axis or y-axis direction) of the electronic device 400. In addition, a radiation direction of a magnetic force generated in the wireless charging module 410 may be made to be directed toward the horizontal direction (e.g., the x-axis direction or the y-axis direction) of the electronic device 400.

For example, a radiation direction of a magnetic force generated by the magnetic unit 2200 itself may be directed from the first magnet unit 2210 to the shielding part 2230, and may be directed from the shielding part 2230 to the second magnet unit 2220. Conversely, a radiation direction of a magnetic force generated by the magnetic unit 2200 itself may be directed from the second magnet unit 2220 to the shielding part 2230, and may be directed from the shielding part 2230 to the first magnet unit 2210.

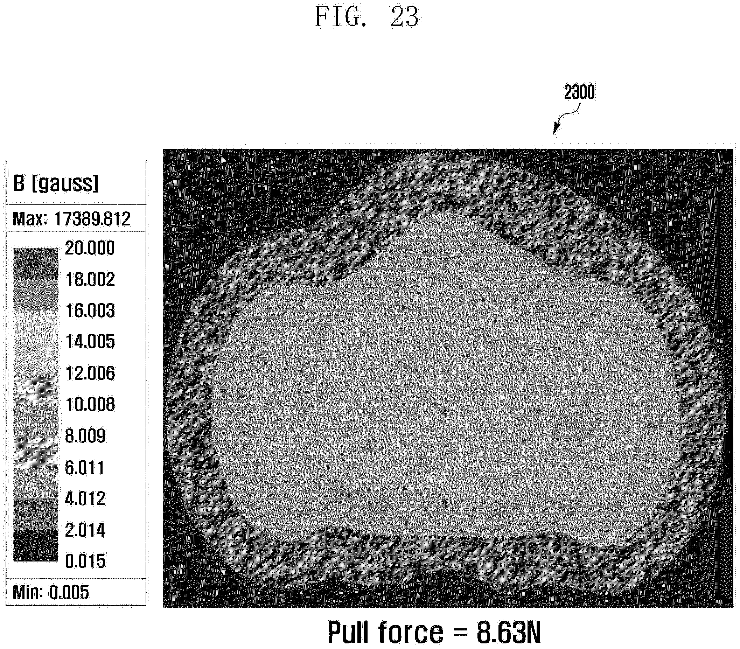

FIG. 23 is a view 2300 illustrating an influence of a magnetic force generated in a magnetic unit according to one embodiment of the present disclosure.

With reference to FIG. 23, when the magnetic unit 1600 of FIG. 16, the magnetic unit 1700 of FIG. 17, the magnetic unit 1800 of FIG. 18, the magnetic unit 1900 of FIG. 19, the magnetic unit 2000 of FIG. 20, or the magnetic unit 2100 of FIG. 21 is applied, a magnetic force directed to a vertical direction (e.g., a z-axis direction) of an electronic device (e.g., a wireless power receiving device) may be reduced. In this case, by maintaining (or improving) an attraction (Pull force) between the electronic device (e.g., a wireless power receiving device) and a wireless power transmitting device (e.g., the second electronic device 202 of FIG. 2) (e.g., full force=8.63N), an alignment performance of a coil may be increased. For example, when the magnetic unit 1600 of FIG. 16, the magnetic unit 1700 of FIG. 17, the magnetic unit 1800 of FIG. 18, the magnetic unit 1900 of FIG. 19, the magnetic unit 2000 of FIG. 20, or the magnetic unit 2100 of FIG. 21 is applied, by reducing a magnetic force directed to a vertical direction (e.g., a z-axis direction) of an electronic device (e.g., a wireless power receiving device), an influence on driving of electronic components (e.g., a digitizer, a camera module) disposed inside the electronic device (e.g., a wireless power receiving device) may be reduced.

An electronic device according to one embodiment of the present disclosure may include a wireless charging module that charges a battery by a wireless charging scheme (e.g., the wireless charging module 410 of FIG. 4 and FIG. 5). The wireless charging module 410 may include a wireless charging power receiver induction coil 411 having a joining surface and a center orthogonal to the joining surface, and a magnetic unit (e.g., the magnetic unit 412 of FIG. 7, the magnetic unit 1301 of FIG. 13, the magnetic unit 1400 of FIG. 14, the magnetic unit 1600 of FIG. 16, the magnetic unit 1700 of FIG. 17, the magnetic unit 1800 of FIG. 18, the magnetic unit 1900 of FIG. 19, the magnetic unit 2000, the magnetic unit 2100 of FIG. 21, the magnetic unit 2200 of FIG. 22) disposed outside the wireless charging power receiver induction coil 411 so as to achieve alignment between a wireless charging power transmitter induction coil (e.g., the transmitting coil 311L of FIG. 3) and the wireless charging power receiver induction coil 411. The magnetic body unit 412, 1301, 1400, 1600, 1700, 1800, 1900, 2000, 2100, 2200 may have a magnet, in which a portion close to a center and a portion far from the center have polarities of opposite schemes, disposed (or arranged) so as to be perpendicular to the joining surface. The magnetic body unit 412, 1301, 1400, 1600, 1700, 1800, 1900, 2000, 2100, 2200 may be disposed in a U-shape with a magnet connecting magnets of different polarities at a portion far from the joining surface.

According to one embodiment, at least a portion of the magnetic unit 412, 1301, 1400, 1600, 1700, 1800, 1900, 2000, 2100, 2200 may be disposed to protrude toward the joining surface.

According to one embodiment, at least a portion of the magnetic unit 412, 1301, 1400, 1600, 1700, 1800, 1900, 2000, 2100, 2200 may be disposed to be recessed from the joining surface.

According to one embodiment, the magnetic unit 412, 1301, 1400, 1600, 1700, 1800, 1900, 2000, 2100, 2200 may block a magnetic force from leaking in a direction far from the joining surface.

An electronic device according to one embodiment of the present disclosure may include a wireless charging module 410 that charges a battery by a wireless charging scheme. The wireless charging module 410 may include a coil 411 that is wound and disposed with reference to a center point, a magnetic unit disposed to surround the coil 411, and a shielding part disposed at an upper portion of the magnetic unit 412, 1301, 1400, 1600, 1700, 1800, 1900, 2000, 2100, 2200. The magnetic unit 412, 1301, 1400, 1600, 1700, 1800, 1900, 2000, 2100, 2200 may include a first magnet unit 1310, 1410, 1610, 1710, 1810, 1910, 2010, 2110, 2210, a second magnet unit 1320, 1420, 1620, 1720, 1820, 1920, 2020, 2120, 2220, and a third magnet unit 1340, 1440, 1640, 1740, 1840, 1940, 2140. According to one embodiment, the first magnet unit 1310, 1410, 1610, 1710, 1810, 1910, 2010, 2110, 2210 may be disposed so that a first polarity and a second polarity opposite to the first polarity are formed in a vertical direction of the electronic device. The second magnet unit 1320, 1420, 1620, 1720, 1820, 1920, 2020, 2120, 2220 may be disposed at a predetermined interval from the first magnet unit 1310, 1410, 1610, 1710, 1810, 1910, 2010, 2110, 2210, so that a first polarity and a second polarity opposite to the first polarity are formed in the vertical direction of the electronic device. The third magnet unit 1340, 1440, 1640, 1740, 1840, 1940, 2140 may be disposed between the first magnet unit 1310, 1410, 1610, 1710, 1810, 1910, 2010, 2110, 2210 and the second magnet unit 1320, 1420, 1620, 1720, 1820, 1920, 2020, 2120, 2220, so that a first polarity and a second polarity opposite to the first polarity are formed in a horizontal direction of the electronic device.

According to one embodiment, a non-magnetic unit 1350, 1450, 1650, 1750, 1850, 1950, 2050, 2150, 2250 disposed between the first magnet unit 1310, 1410, 1610, 1710, 1810, 1910, 2010, 2110, 2210 and the second magnet unit 1320, 1420, 1620, 1720, 1820, 1920, 2020, 2120, 2220 may be further included.

According to one embodiment, the non-magnetic unit 1350, 1450, 1650, 1750, 1850, 1950, 2050, 2150, 2250 may be disposed at a lower portion of the third magnet unit 1340, 1440, 1640, 1740, 1840, 1940, 2140.

According to one embodiment, the first magnet unit 1310, 1410, 1610, 1710, 1810, 1910, 2010, 2110, 2210 may be disposed so that a first polarity and a second polarity opposite to the first polarity are formed in a direction 2015 offset by a predetermined angle from the vertical direction of the electronic device.

According to one embodiment, the second magnet unit 1320, 1420, 1620, 1720, 1820, 1920, 2020, 2120, 2220 may be disposed so that a first polarity and a second polarity opposite to the first polarity are formed in a direction 2025 offset by a predetermined angle from the vertical direction of the electronic device.

According to one embodiment, one side of the first magnet unit 1310, 1410, 1610, 1710, 1810, 1910, 2010, 2110, 2210 and a first side of the third magnet unit 1340, 1440, 1640, 1740, 1840, 1940, 2140 may be disposed to be in contact. One side of the second magnet unit 1320, 1420, 1620, 1720, 1820, 1920, 2020, 2120, 2220 and a second side of the third magnet unit 1340, 1440, 1640, 1740, 1840, 1940, 2140 may be disposed to be in contact.

According to one embodiment, an upper surface of the first magnet unit 1310, 1410, 1610, 1710, 1810, 1910, 2010, 2110, 2210 and a lower surface of the third magnet unit 1340, 1440, 1640, 1740, 1840, 1940, 2140 may be disposed to be overlapped. An upper surface of the second magnet unit 1320, 1420, 1620, 1720, 1820, 1920, 2020, 2120, 2220 and the lower surface of the third magnet unit 1340, 1440, 1640, 1740, 1840, 1940, 2140 may be disposed to be overlapped.

According to one embodiment, one side surface of the first magnet unit 1310, 1410, 1610, 1710, 1810, 1910, 2010, 2110, 2210 may be formed as an inclined surface. One side surface of the second magnet may be formed as an inclined surface. A first side surface and a second side surface of the third magnet unit 1340, 1440, 1640, 1740, 1840, 1940, 2140 may be formed as inclined surfaces. One side surface of the first magnet unit 1310, 1410, 1610, 1710, 1810, 1910, 2010, 2110, 2210 and a first side surface of the third magnet unit 1340, 1440, 1640, 1740, 1840, 1940, 2140 may be disposed to be in contact. One side surface of the second magnet unit 1320, 1420, 1620, 1720, 1820, 1920, 2020, 2120, 2220 and a second side surface of the third magnet unit 1340, 1440, 1640, 1740, 1840, 1940, 2140 may be disposed to be in contact.

According to one embodiment, an upper surface of the first magnet unit 1310, 1410, 1610, 1710, 1810, 1910, 2010, 2110, 2210 may be formed as an inclined surface. An upper surface of the second magnet may be formed as an inclined surface. A first side surface and a second side surface of the third magnet unit 1340, 1440, 1640, 1740, 1840, 1940, 2140 may be formed as inclined surfaces. An upper surface of the first magnet unit 1310, 1410, 1610, 1710, 1810, 1910, 2010, 2110, 2210 and a first side surface of the third magnet unit 1340, 1440, 1640, 1740, 1840, 1940, 2140 may be disposed to be in contact. An upper surface of the second magnet unit 1320, 1420, 1620, 1720, 1820, 1920, 2020, 2120, 2220 and a second side surface of the third magnet unit 1340, 1440, 1640, 1740, 1840, 1940, 2140 may be disposed to be in contact.

According to one embodiment, the first magnet unit 1310, 1410, 1610, 1710, 1810, 1910, 2010, 2110, 2210, the second magnet unit 1320, 1420, 1620, 1720, 1820, 1920, 2020, 2120, 2220, and the third magnet unit 1340, 1440, 1640, 1740, 1840, 1940, 2140 may be formed to have substantially the same thickness.

According to one embodiment, the third magnet unit 1340, 1440, 1640, 1740, 1840, 1940, 2140 may be formed to have a thickness substantially the same as the first magnet unit 1310, 1410, 1610, 1710, 1810, 1910, 2010, 2110, 2210 or the second magnet unit 1320, 1420, 1620, 1720, 1820, 1920, 2020, 2120, 2220. The third magnet unit 1340, 1440, 1640, 1740, 1840, 1940, 2140 may be formed to be thinner than the first magnet unit 1310, 1410, 1610, 1710, 1810, 1910, 2010, 2110, 2210 or the second magnet unit 1320, 1420, 1620, 1720, 1820, 1920, 2020, 2120, 2220.

According to one embodiment, the third magnet unit 1340, 1440, 1640, 1740, 1840, 1940, 2140 may be formed to have a thickness substantially the same as the first magnet unit 1310, 1410, 1610, 1710, 1810, 1910, 2010, 2110, 2210 or the second magnet unit 1320, 1420, 1620, 1720, 1820, 1920, 2020, 2120, 2220. The third magnet unit 1340, 1440, 1640, 1740, 1840, 1940, 2140 may be formed to be thicker than the first magnet unit 1310, 1410, 1610, 1710, 1810, 1910, 2010, 2110, 2210 or the second magnet unit 1320, 1420, 1620, 1720, 1820, 1920, 2020, 2120, 2220.

An electronic device according to one embodiment of the present disclosure may include a wireless charging module 410 that charges a battery by a wireless charging scheme. The wireless charging module 410 may include a coil 411 that is wound and disposed with reference to a center point, a magnetic unit disposed to surround the coil 411, and a shielding part disposed at an upper portion of the magnetic unit 412, 1301, 1400, 1600, 1700, 1800, 1900, 2000, 2100, 2200. The magnetic unit 412, 1301, 1400, 1600, 1700, 1800, 1900, 2000, 2100, 2200 may include a first magnet unit 1310, 1410, 1610, 1710, 1810, 1910, 2010, 2110, 2210, a second magnet unit 1320, 1420, 1620, 1720, 1820, 1920, 2020, 2120, 2220, and a third magnet unit 1340, 1440, 1640, 1740, 1840, 1940, 2140. The first magnet unit 1310, 1410, 1610, 1710, 1810, 1910, 2010, 2110, 2210 may be disposed so that a first polarity and a second polarity opposite to the first polarity are formed in a direction offset by a predetermined angle from a vertical direction of the electronic device. The second magnet unit 1320, 1420, 1620, 1720, 1820, 1920, 2020, 2120, 2220 may be disposed at a predetermined interval from the first magnet unit 1310, 1410, 1610, 1710, 1810, 1910, 2010, 2110, 2210, so that a first polarity and a second polarity opposite to the first polarity are formed in a direction offset by a predetermined angle from the vertical direction of the electronic device.

According to one embodiment, a third magnet unit 1340, 1440, 1640, 1740, 1840, 1940, 2140 disposed between the first magnet unit 1310, 1410, 1610, 1710, 1810, 1910, 2010, 2110, 2210 and the second magnet unit 1320, 1420, 1620, 1720, 1820, 1920, 2020, 2120, 2220 may be further included. The third magnet unit 1340, 1440, 1640, 1740, 1840, 1940, 2140 may be disposed so that a first polarity and a second polarity opposite to the first polarity are formed in a horizontal direction of the electronic device.

According to one embodiment, a non-magnetic unit 1350, 1450, 1650, 1750, 1850, 1950, 2050, 2150, 2250 disposed between the first magnet unit 1310, 1410, 1610, 1710, 1810, 1910, 2010, 2110, 2210 and the second magnet unit 1320, 1420, 1620, 1720, 1820, 1920, 2020, 2120, 2220 may be further included.

According to one embodiment, the non-magnetic unit 1350, 1450, 1650, 1750, 1850, 1950, 2050, 2150, 2250 may be disposed at a lower portion of the third magnet unit 1340, 1440, 1640, 1740, 1840, 1940, 2140.

An electronic device according to one embodiment of the present disclosure may substantially eliminate (or reduce) an influence on driving of a digitizer and a camera module due to a magnetic force generated from a magnetic unit (e.g., a magnet unit, a magnet structure, a magnetic structure) even when the magnetic unit (e.g., a magnet unit, a magnet structure, a magnetic structure) is disposed to surround a coil of a wireless charging module.

An electronic device according to one embodiment of the present disclosure may, when applying a magnetic unit that is disposed to surround a coil, reduce a magnetic force directed to a vertical direction (e.g., a z-axis direction) of an electronic device (e.g., a wireless power receiving device). In this case, by maintaining (or improving) an attraction (Pull force) between the electronic device (e.g., the wireless power receiving device) and a wireless power transmitting device, an alignment performance of the coil may be increased.

An electronic device according to one embodiment of the present disclosure may, when applying the magnetic unit that is disposed to surround the coil, by reducing a magnetic force directed to a vertical direction (e.g., a z-axis direction) of an electronic device (e.g., a wireless power receiving device), reduce an influence on driving of electronic components (e.g., a digitizer, a camera module) disposed inside the electronic device (e.g., the wireless power receiving device).

The effects obtained by the present disclosure are not limited to the aforementioned effects, and other effects, which are not mentioned above, will be clearly understood by those skilled in the art to which the present disclosure pertains.

## Claims

1. An electronic device, comprising:
a wireless charging module (410) configured to charge a battery by a wireless charging scheme,
wherein the wireless charging module (410) comprises:
a coil (411) wound and disposed with reference to a center point;
a magnetic unit disposed to surround the coil (411); and
a shielding part disposed at an upper portion of the magnetic unit (412, 1301, 1400, 1600, 1700, 1800, 1900, 2000, 2100, 2200),
wherein the magnetic unit (412, 1301, 1400, 1600, 1700, 1800, 1900, 2000, 2100, 2200) comprises:
a first magnet unit (1310, 1410, 1610, 1710, 1810, 1910, 2010, 2110, 2210);
a second magnet unit (1320, 1420, 1620, 1720, 1820, 1920, 2020, 2120, 2220); and
a third magnet unit (1340, 1440, 1640, 1740, 1840, 1940, 2140), and
wherein the first magnet unit (1310, 1410, 1610, 1710, 1810, 1910, 2010, 2110, 2210) is disposed so that a first polarity and a second polarity opposite to the first polarity are formed in a vertical direction of the electronic device,
the second magnet unit (1320, 1420, 1620, 1720, 1820, 1920, 2020, 2120, 2220) is disposed at a predetermined interval from the first magnet unit (1310, 1410, 1610, 1710, 1810, 1910, 2010, 2110, 2210) so that a first polarity and a second polarity opposite to the first polarity are formed in the vertical direction of the electronic device, and
the third magnet unit (1340, 1440, 1640, 1740, 1840, 1940, 2140) is disposed between the first magnet unit (1310, 1410, 1610, 1710, 1810, 1910, 2010, 2110, 2210) and the second magnet unit (1320, 1420, 1620, 1720, 1820, 1920, 2020, 2120, 2220) so that a first polarity and a second polarity opposite to the first polarity are formed in a horizontal direction of the electronic device.

2. The electronic device of claim 1, further comprising:
a non-magnetic unit (1350, 1450, 1650, 1750, 1850, 1950, 2050, 2150, 2250) disposed between the first magnet unit (1310, 1410, 1610, 1710, 1810, 1910, 2010, 2110, 2210) and the second magnet unit (1320, 1420, 1620, 1720, 1820, 1920, 2020, 2120, 2220).

3. The electronic device of claim 2, wherein the non-magnetic unit (1350, 1450, 1650, 1750, 1850, 1950, 2050, 2150, 2250) is disposed at a lower portion of the third magnet unit (1340, 1440, 1640, 1740, 1840, 1940, 2140).

4. The electronic device of claim 2, wherein the first magnet unit (1310, 1410, 1610, 1710, 1810, 1910, 2010, 2110, 2210) is disposed so that a first polarity and a second polarity opposite to the first polarity are formed in a direction (2015) offset by a predetermined angle from the vertical direction of the electronic device.

5. The electronic device of claim 2, wherein the second magnet unit (1320, 1420, 1620, 1720, 1820, 1920, 2020, 2120, 2220) is disposed so that a first polarity and a second polarity opposite to the first polarity are formed in a direction (2025) offset by a predetermined angle from the vertical direction of the electronic device.

6. The electronic device of any one of claims 1 to 3, wherein one side of the first magnet unit (1310, 1410, 1610, 1710, 1810, 1910, 2010, 2110, 2210) and a first side of the third magnet unit (1340, 1440, 1640, 1740, 1840, 1940, 2140) are disposed to be in contact, and
one side of the second magnet unit (1320, 1420, 1620, 1720, 1820, 1920, 2020, 2120, 2220) and a second side of the third magnet unit (1340, 1440, 1640, 1740, 1840, 1940, 2140) are disposed to be in contact.

7. The electronic device of any one of claims 1 to 3, wherein an upper surface of the first magnet unit (1310, 1410, 1610, 1710, 1810, 1910, 2010, 2110, 2210) and a lower surface of the third magnet unit (1340, 1440, 1640, 1740, 1840, 1940, 2140) are disposed to be overlapped, and
an upper surface of the second magnet unit (1320, 1420, 1620, 1720, 1820, 1920, 2020, 2120, 2220) and the lower surface of the third magnet unit (1340, 1440, 1640, 1740, 1840, 1940, 2140) are disposed to be overlapped.

8. The electronic device of any one of claims 1 to 3, wherein one side surface of the first magnet unit (1310, 1410, 1610, 1710, 1810, 1910, 2010, 2110, 2210) is formed as an inclined surface,
one side surface of the second magnet is formed as an inclined surface,
a first side surface and a second side surface of the third magnet unit (1340, 1440, 1640, 1740, 1840, 1940, 2140) are formed as inclined surfaces,
the one side surface of the first magnet unit (1310, 1410, 1610, 1710, 1810, 1910, 2010, 2110, 2210) and the first side surface of the third magnet unit (1340, 1440, 1640, 1740, 1840, 1940, 2140) are disposed to be in contact, and
the one side surface of the second magnet unit (1320, 1420, 1620, 1720, 1820, 1920, 2020, 2120, 2220) and the second side surface of the third magnet unit (1340, 1440, 1640, 1740, 1840, 1940, 2140) are disposed to be in contact.

9. The electronic device of any one of claims 1 to 3, wherein an upper surface of the first magnet unit (1310, 1410, 1610, 1710, 1810, 1910, 2010, 2110, 2210) is formed as an inclined surface,
an upper surface of the second magnet is formed as an inclined surface,
a first side surface and a second side surface of the third magnet unit (1340, 1440, 1640, 1740, 1840, 1940, 2140) are formed as inclined surfaces,
the upper surface of the first magnet unit (1310, 1410, 1610, 1710, 1810, 1910, 2010, 2110, 2210) and the first side surface of the third magnet unit (1340, 1440, 1640, 1740, 1840, 1940, 2140) are disposed to be in contact, and
the upper surface of the second magnet unit (1320, 1420, 1620, 1720, 1820, 1920, 2020, 2120, 2220) and the second side surface of the third magnet unit (1340, 1440, 1640, 1740, 1840, 1940, 2140) are disposed to be in contact.

10. The electronic device of any one of claims 1 to 7, wherein the first magnet unit (1310, 1410, 1610, 1710, 1810, 1910, 2010, 2110, 2210), the second magnet unit (1320, 1420, 1620, 1720, 1820, 1920, 2020, 2120, 2220), and the third magnet unit (1340, 1440, 1640, 1740, 1840, 1940, 2140) are formed to have substantially the same thickness.

11. The electronic device of any one of claims 1 to 7, wherein the first magnet unit (1310, 1410, 1610, 1710, 1810, 1910, 2010, 2110, 2210) or the second magnet unit (1320, 1420, 1620, 1720, 1820, 1920, 2020, 2120, 2220) is formed to have substantially the same thickness, and
the third magnet unit (1340, 1440, 1640, 1740, 1840, 1940, 2140) is formed to be thinner than the first magnet unit (1310, 1410, 1610, 1710, 1810, 1910, 2010, 2110, 2210) or the second magnet unit (1320, 1420, 1620, 1720, 1820, 1920, 2020, 2120, 2220).

12. The electronic device of any one of claims 1 to 7, wherein the first magnet unit (1310, 1410, 1610, 1710, 1810, 1910, 2010, 2110, 2210) or the second magnet unit (1320, 1420, 1620, 1720, 1820, 1920, 2020, 2120, 2220) is formed to have substantially the same thickness, and
the third magnet unit (1340, 1440, 1640, 1740, 1840, 1940, 2140) is formed to be thicker than the first magnet unit (1310, 1410, 1610, 1710, 1810, 1910, 2010, 2110, 2210) or the second magnet unit (1320, 1420, 1620, 1720, 1820, 1920, 2020, 2120, 2220).
